# EUROPÄISCHE PATENTSCHRIFT

(11) **EP 3 365 953 B1**
(45) Veröffentlichungstag und Bekanntmachung des Hinweises auf die Patenterteilung: **19.06.2019**
(21) Anmeldenummer: 16787326.4
(22) Anmeldetag: 19.10.2016
(51) Int. Cl.: H02G 3/32, F03D 80/80, F16L 3/10

(54) **EINRICHTUNG ZUR FIXIERUNG UND/ODER FÜHRUNG VON STRANGFÖRMIGEN ELEMENTEN**
DEVICE FOR FASTENING AND/OR GUIDING STRAND-SHAPED ELEMENTS
DISPOSITIF DE FIXATION ET/OU DE GUIDAGE D'ÉLÉMENTS EN FORME DE FAISCEAUX

(30) Priorität: 22.10.2015 DE 102015013791
(43) Veröffentlichungstag der Anmeldung: 29.08.2018
(73) Patentinhaber: Hydac Accessories GmbH, 66280 Sulzbach/Saar (DE)
(72) Erfinder: YAGCI, Burhan, 66280 Sulzbach (DE)
(74) Vertreter: Bartels, Martin Erich Arthur
(86) Internationale Anmeldenummer: PCT/EP2016/001730
(87) Internationale Veröffentlichungsnummer: WO 2017/067658

(56) Entgegenhaltungen:
- DE-A1-102012 019 490
- DE-A1-102013 010 821
- DE-C- 695 125
- JP-A- H07 183 670

## Beschreibung

Die Erfindung betrifft eine Einrichtung zur Fixierung und/oder Führung von strangförmigen Elementen, insbesondere von Kabeln oder Kabelbündeln bei Windkraftanlagen, mit mindestens einem zur Bildung eines modularen Befestigungssystems mit einer Trägerstruktur kombinierbaren Haltekörper, der einen Strangaufnahmeraum als Lagerung für zumindest ein Strangelement aufweist, das in diesen durch eine an dessen Außenseite befindliche Öffnung einlegbar ist, wobei die Öffnung durch eine Abdeckeinrichtung verschließbar ist, die ein Andrückteil aufweist, das mittels eines Energiespeichers in eine Spannposition bewegbar ist, um innerhalb eines Spannbereichs eine Haltekraft auf im Strangaufnahmeraum befindliche Strangelemente auszuüben.

Um die in Windkraftanlagen erzeugten Energien abzuführen sowie für andere betriebliche Zwecke, wie Steuerung, Überwachung und dergleichen, sind Strangelemente, wie Kabel zur Leistungsübertragung, Schläuche, Rohre und/oder Leitungen für Steuerungs- oder Kommunikationszwecke, die vom Maschinenhaus in den Turm führen, an entsprechenden Trägerstrukturen, insbesondere an den Turmsegmenten, zuverlässig festzulegen. Als Beispiele für den diesbezüglichen Stand der Technik sind Einrichtungen der eingangs genannten Gattung in den Dokumenten DE10 2010 032 686 A1 oder DE 10 2012 017 463 A1 offenbart. Dabei können die Haltekörper in einer geradlinigen Aufeinanderfolge nebeneinander angeordnet sein, wie dies bei der aus DE 10 2010 032 686 A1 bekannten Lösung der Fall ist, oder können in einer entlang eines Teilkreisbogens oder eines Kreisbogens aufeinanderfolgend angeordnet sein, wobei die Öffnungen der die Lagerung für Strangelemente bildenden Haltekörper radial außen gelegen sind. Bei den bekannten Einrichtungen ist das Andrückteil der zum Verschließen der Öffnung der Haltekörper vorgesehenen Abdeckeinrichtung mittels eines Federpakets belastet, um auf in der Lagerung befindliche Strangelemente eine Haltekraft auszuüben. Um eine sichere Fixierung der Strangelemente zu gewährleisten, sind bei einem Einsatz bei Windkraftanlagen, wo auch hohe Kabelgewichte beherrschbar sein müssen, Haltekräfte von etwa 200 N bis 400 N erforderlich. Beim Vorgang des Verschließens der Öffnungen der Haltekörper sind daher entsprechend hohe Schließkräfte zu überwinden, so dass sich die Betätigung der bekannten Einrichtungen für das Bedienpersonal verhältnismäßig mühsam und entsprechend zeitaufwendig gestaltet.

Weitere Einrichtungen zur Fixierung und/oder Führung von strangförmigen Elementen gehen aus der DE 10 2013 010 821 A1, der DE 10 2012 019 490 A1, der JP H07-183670 und der DE 695 125 C hervor.

Ausgehend von diesem Stand der Technik stellt sich die Erfindung die Aufgabe, eine Einrichtung der eingangs genannten Gattung zur Verfügung zu stellen, die besonders einfach und bequem betätigbar ist.

Entsprechend dem kennzeichnenden Teil des Anspruchs 1 ist diese Aufgabe erfindungsgemäß bei einer Einrichtung der eingangs genannten Gattung dadurch gelöst, dass die Abdeckeinrichtung eine Verriegelungseinrichtung aufweist, mittels der das Andrückteil gegen die Wirkung des Energiespeichers gegen eine Bewegung in die Spannposition wahlweise sicherbar oder für eine Spannbewegung freigebbar ist. Bei verriegeltem Andrückteil und dadurch unwirksam gemachtem Energiespeicher lässt sich die Öffnung der jeweiligen Lagerung der Haltekörper ohne großen Kraftaufwand durch die Abdeckeinrichtung verschließen, so dass die erfindungsgemäße Einrichtung einfach und bequem und dadurch mit geringem Zeitaufwand betätigbar ist. Vorteilhafterweise ist das Andrückteil durch mindestens eine als Energiespeicher dienende Druckfeder, die sich an dem am Haltekörper anbringbaren Hauptteil der Abdeckeinrichtung abstützt, für die relativ zum Hauptteil erfolgende Bewegung in die Spannposition vorgespannt. Dabei kann ein Federpaket aus mehreren Druckfedern vorgesehen sein, wobei sich bei einem rechteckförmigen Hauptteil vorzugsweise je eine an dessen vier Eckbereichen abstützt.

Bei besonders vorteilhaften Ausführungsbeispielen weist die Lagerung zwei in Axialrichtung der Spannelemente beabstandete Lagerwangen auf, die in jeweils einer von der Öffnung an der Außenseite ausgehenden, muldenartigen Ausnehmung die Anlageflächen für Strangelemente bilden. Die in den muldenartigen Ausnehmungen gebildeten Anlageflächen können in ihrer Formgebung an die in Frage kommenden unterschiedlichen Arten, Formen und Größen von Strangelementen oder -bündeln angepasst sein.

Bei besonders vorteilhaften Ausführungsbeispielen weist der Haltekörper ein Gestell in Form eines U-Profils auf, bei dem die Lagerwangen durch parallel zueinander verlaufende Profilschenkel gebildet sind, die durch einen eine Anbringfläche für die Verbindung mit der Trägerstruktur bildenden Steg miteinander verbunden sind. Dabei kann das U-Profil ein Biegeteil aus Metallblech sein, wobei die die Lagerwangen bildenden Profilschenkel zur Bildung einer Profilleiste verlängert sein können, die eine entsprechende Anzahl von Haltekörpern in Aufeinanderfolge bildet.

Mit besonderem Vorteil kann die Anordnung so getroffen sein, dass die Weite der Ausnehmungen der Lagerwangen, ausgehend von den Anlageflächen am Grund der Ausnehmungen in Richtung auf die Öffnung hin, in Stufen erweitert ist, von denen untere Stufen Führungsflächen für die Spannbewegung des Andrückteils und sich in Richtung der Öffnung anschließende Stufen Sitzflächen für die an der Lagerung angebrachte Abdeckeinrichtung bilden. Die Ausnehmungen der Lagerwangen bilden dadurch sowohl einen Sitz für die die Öffnung verschließende Abdeckeinrichtung als auch die Führung für das bewegbare Andrückteil.

Bei vorteilhaften Ausführungsbeispielen weist das Hauptteil der Abdeckeinrichtung ein in Richtung auf das Andrückteil offenes Schalenteil auf, das sich bei an der Lagerung angebrachter Position in Axialrichtung der Strangelemente von Lagerwange zu Lagerwange erstreckt und an den zwischen diesen verlaufenden Seiten Führungsbahnen bildet, in denen Ansätze des Andrückteils für dessen relativ zum Hauptteil erfolgende Bewegungen geführt sind. Mit Vorteil können dabei die Ansätze mit einem über das Hauptteil überstehenden Endbereich Funktionselemente der Verriegelungseinrichtung, also die Wirkverbindung zwischen Andrückteil und Verriegelungseinrichtung, bilden. Im Innenraum des Schalenteiles können die Druckfedern angeordnet sein.

Die Verriegelungseinrichtung kann mit besonderem Vorteil einen manuell drehbaren Exzenter aufweisen, der sich auf der Oberseite des Hauptteils abstützt, so dass die die Exzenterachse bildende Exzenterwelle bei Drehung eine Hubbewegung relativ zum Hauptteil ausführt, wobei die Exzenterwelle in ein Langloch in den Ansätzen des Andrückteils derart eingreift, dass bei der Verriegelungsstellung des Exzenters das Andrückteil gegen die vorspannende Federwirkung an das Hauptteil gezogen ist und bei der Freigabestellung des Exzenters für die Spannbewegung freigegeben ist. Dadurch, dass dergestalt das den Energiespeicher bildende Federpaket mittels eines Exzenters spannbar ist, lässt sich die Verriegelungseinrichtung mit geringem, für das Drehen des Exzenters erforderlichem Kraftaufwand betätigen.

Mit Vorteil kann die Anordnung so getroffen sein, dass die Lagerwangen an der Öffnung der Ausnehmungen gegeneinander vorspringende Hakenteile aufweisen, die sich an Vertiefungen in den Lagerwangen anschließen, die beim Vorgang des Anbringens der Abdeckeinrichtung von Halteflügeln durchgreifbar sind, die am Hauptteil seitlich auskragend angeordnet und bei der angebrachten Position von den Hakenteilen übergriffen sind. Die Abdeckeinrichtung lässt sich durch das formschlüssige Übergreifen der Hakenteile sicher am betreffenden Haltekörper festlegen.

Die Halteflügel können an den Enden einer Deckplatte des Hauptteils vorgesehen sein, auf der sich der Exzenter der Verriegelungseinrichtung abstützt. Eine derartige Deckplatte kann beispielsweise als Blechteil ausgebildet sein, das mit dem beispielsweise aus Kunststoff bestehenden, schalenartigen Hauptteil verclipst sein und zur Strukturfestigkeit des gesamten Hauptteils beitragen kann, wobei durch die metallischen Halteflügel eine sichere Festlegung der Abdeckeinrichtung an der Öffnung der Lagerung gewährleistet ist.

Die Anordnung kann weiterhin mit Vorteil so getroffen sein, dass an beiden den Lagerwangen zugeordneten Enden der die Führungsbahnen aufweisenden Seiten des Hauptteils nachgiebig vorspringende Rastnasen vorgesehen sind, die bei auf die Lagerung ausgerichteter Position der Abdeckeinrichtung an den Innenseiten der Lagerwangen einrasten. Das Anbringen der Abdeckeinrichtung an der Öffnung des betreffenden Haltekörpers gestaltet sich dadurch besonders einfach und bequem, weil beim seitlichen Einschieben der Halteflügel in die Vertiefungen unter den Hakenteilen der Lagerwangen durch das Einfallen der Rastnasen das Erreichen der Ausrichtposition der Abdeckeinrichtung signalisiert wird.

Die Verriegelungseinrichtung kann mit besonderem Vorteil einen manuell drehbaren Exzenter aufweisen, der sich auf der Oberseite des Hauptteils derart abstützt, dass ein zugehöriger, die Exzenterachse bildender Kurbelzapfen bei Drehung eine Hubbewegung relativ zum Hauptteil ausführt, wobei der Kurbelzapfen mit dem Andrückteil über eine Pleuelstange derart gekoppelt ist, dass bei der Verriegelungsstellung des Exzenters das Andrückteil gegen die vorspannende Federwirkung an das Hauptteil gezogen ist und bei der Freigabestellung des Exzenters für die Spannbewegung freigegeben ist. Dadurch, dass dergestalt das den Energiespeicher bildende Federpaket mittels eines Exzenters spannbar ist, lässt sich die Verriegelungseinrichtung mit geringem, für das Drehen des Exzenters erforderlichem Kraftaufwand betätigen.

Bei besonders vorteilhaften Ausführungsbeispielen weist der Exzenter ein Zylinderteil auf, das mittels eines von ihm auskragenden Handhebels manuell drehbar ist, sich an der Oberseite des Hauptteils abstützt und den in einem Abstand von der Zylinderachse befindlichen Kurbelzapfen aufweist.

Die Anordnung kann dabei mit besonderem Vorteil so getroffen sein, dass das Zylinderteil durch zwei in einem Abstand voneinander befindliche Kreisscheiben gebildet ist, zwischen denen der Kurbelzapfen für die zwischen die Kreisscheiben eingreifende Pleuelstange angeordnet ist.

Mit besonderem Vorteil kann hierbei an der Oberseite des Hauptteils eine Mulde als Lagerung des Zylinderteils gebildet sein, in die das Zylinderteil durch eine Ausnehmung hindurch eingreift, die in einer Deckplatte ausgespart ist, die an der Oberseite des Hauptteils anliegt, wobei die Ausnehmung durch einander gegenüberliegende Öffnungsränder begrenzt ist, die entlang der Ebenen der in die Ausnehmung eingreifenden Kreisscheiben verlaufen. Dadurch ist für den Exzenter eine definierte Position auf der Oberseite des Hauptteils vorgegeben, wobei die Deckplatte mit zwei gegenüberliegenden Öffnungsrändern eine in Axialrichtung der Kreisscheiben wirksame Führung des Exzenters bildet.

Bei besonders vorteilhaften Ausführungsbeispielen weist der Haltekörper einen Strangaufnahmeraum in Form einer U- oder V-förmigen Vertiefung mit einer Einlegeöffnung mit einander gegenüberliegenden Öffnungsrändern auf, an deren einem die Abdeckeinrichtung derart schwenkbar angebracht ist, dass sie zwischen einer Öffnungsstellung und einer die Einlegeöffnung verschließenden Stellung bewegbar ist, wobei an der Abdeckeinrichtung eine Riegelanordnung vorgesehen ist, mittels der sie in der schließenden Stellung lösbar mit dem anderen Öffnungsrand der Einlegeöffnung verriegelbar ist.

Bei vorteilhaften Ausführungsbeispielen ist der Haltekörper durch ein Blechbiegeteil mit einem ersten flachen Plattenteil, das die Vertiefung des Strangaufnahmeraums aufweist, und einem davon abgewinkelten zweiten Plattenteil gebildet, das eine der Einlegeöffnung gegenüberliegende Anbringfläche für die Verbindung mit einer betreffenden Trägerstruktur bildet. Wenn es gewünscht ist, mehrere Haltekörper in gerader Aufeinanderfolge nebeneinander anzuordnen, wie dies bei der aus DE 10 2010 032 686 A1 bekannten Einrichtung der Fall ist, kann das Blechbiegeteil zu einer Winkelprofilschiene verlängert sein, wobei in dem das erste Plattenteil bildenden Profilschenkel nebeneinanderliegend die die Strangaufnahmeräume bildenden Vertiefungen ausgespart sind.

Bei besonders vorteilhaften Ausführungsbeispielen kann die Anordnung so getroffen sein, dass das Hauptteil der Abdeckeinrichtung für die Verbindung mit jedem Öffnungsrand der jeweiligen Einlegeöffnung des ersten Plattenteils je ein Paar vom Hauptteil in entgegengesetzte Richtung auskragender Arme aufweist, zwischen denen ein den Eingriff des Plattenteils ermöglichender Zwischenraum gebildet ist.

Mit besonderem Vorteil können hierbei die Arme des der Riegelanordnung zugeordneten Armpaares je ein Langloch aufweisen, in dem ein Riegelbolzen zwischen einer Riegelstellung, in der er mit einem Riegelhaken am betreffenden Öffnungsrand verrastet ist, und einer zurückgezogenen Entriegelstellung bewegbar ist, wobei eine den Riegelbolzen in die Riegelstellung vorspannende Betätigungsfeder vorhanden ist, die zum Lösen der Riegelanordnung manuell in eine den Riegelbolzen zurückziehende Stellung bewegbar ist.

Nachstehend ist die Erfindung anhand von in der Zeichnung dargestellten Ausführungsbeispielen im Einzelnen erläutert. Es zeigen:
- Fig. 1 und 2: in Seitenansicht einen einzelnen Haltekörper einer dem Stand der Technik entsprechenden Einrichtung zum Fixieren und/oder Führen von Strangelementen, wobei der geöffnete Zustand bzw. der mittels der Abdeckeinrichtung geschlossene Zustand des Haltekörpers dargestellt ist;
- Fig. 3: in perspektivischer Schrägansicht einen einzelnen Haltekörper gemäß einem Ausführungsbeispiel der Erfindung, wobei der Zustand ohne in die Lagerung eingelegte Strangelemente und bei entriegeltem Andrückteil der Abdeckeinrichtung gezeigt ist;
- Fig. 4: in explosionsartig auseinandergezogener Darstellung und in perspektivischer Schrägansicht die Abdeckeinrichtung des Ausführungsbeispiels der Erfindung;
- Fig. 5 und 6: Seitenansichten der Abdeckeinrichtung, wobei der entriegelte bzw. der verriegelte Zustand des Andrückteils gezeigt ist;
- Fig. 7: eine perspektivische Schrägansicht eines einzelnen Haltekörpers des Ausführungsbeispiels mit zwei eingelegten Strangelementen, wobei der Zustand vor dem Anbringen der Abdeckeinrichtung dargestellt ist;
- Fig. 8 und 9: abgebrochene, perspektivische Schrägansichten lediglich des Öffnungsbereichs des Haltekörpers, wobei in Aufeinanderfolge zwei Arbeitsschritte beim Anbringvorgang der Abdeckeinrichtung mit verriegeltem Andrückteil dargestellt sind;
- Fig. 10: eine gegenüber Fig. 8 und 9 geringfügig vergrößert gezeichnete perspektivische Schrägansicht des Öffnungsbereichs, wobei der geschlossene Zustand der Abdeckeinrichtung mit entriegeltem Andrückteil dargestellt ist;
- Fig. 11: eine perspektivische Schrägansicht eines Ausführungsbeispiels der erfindungsgemäßen Einrichtung mit durch eine Profilleiste gebildetem und mehrere nebeneinanderliegende Haltekörper aufweisendem Gestell;
- Fig. 12: eine perspektivische Schrägansicht eines weiteren Ausführungsbeispiels, wobei ein einzelner Haltekörper ohne eingelegte Strangelemente gezeigt ist und die Abdeckeinrichtung in Schließstellung und mit verriegeltem Andrückteil gezeigt ist;
- Fig. 13: eine Vorderansicht des Ausführungsbeispiels, wobei die Abdeckeinrichtung mit verriegeltem Andrückteil in die Offenstellung geschwenkt dargestellt ist;
- Fig. 14: in perspektivischer Schrägansicht, vergrößert und in auseinandergezogener Explosionsdarstellung die Abdeckeinrichtung des Ausführungsbeispiels;
- Fig. 15: einen zentralen Längsschnitt der Abdeckeinrichtung mit in Verriegelungsstellung befindlichem Andrückteil;
- Fig. 16: einen der Fig. 15 entsprechenden Längsschnitt mit entriegeltem Andrückteil;
- Fig. 17: eine perspektivische Schrägansicht des Ausführungsbeispiels mit eingelegten Strangelementen, wobei die Abdeckeinrichtung bei verriegeltem Andrückteil in die Offenstellung geschwenkt ist;
- Fig. 18 und 19: der Fig. 17 entsprechende Schrägansichten mit jeweils in der Schließstellung befindlicher Abdeckeinrichtung, wobei das Andrückteil verriegelt bzw. freigegeben ist;
- Fig. 20 bis 26: Draufsichten und Querschnitte einer weiteren Ausführungsform der Verriegelungseinrichtung; und
- Fig. 27 bis 40: perspektivische Ansichten der Verriegelungseinrichtung der Fig. 20 bis 26, welche den Ablauf einer Bewegung von einer Entriegelungsstellung in eine Verriegelungsstellung zeigen.

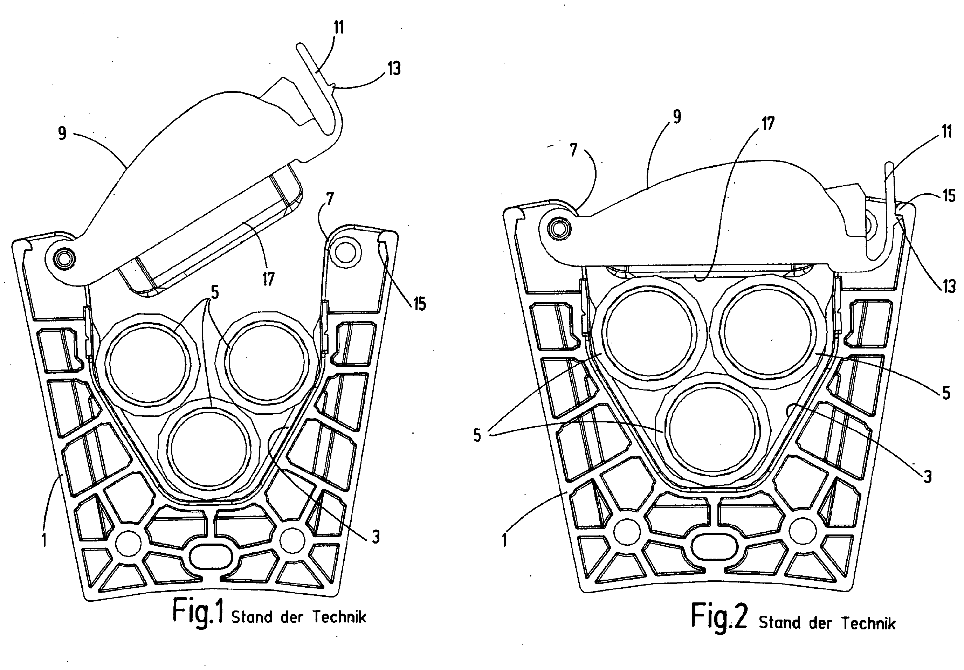

Die Fig. 1 und 2 zeigen von einer dem Stand der Technik entsprechenden Einrichtung zur Fixierung und/oder Führung von Kabeln oder Kabelbündeln einen Haltekörper 1 in Einzeldarstellung ohne zugehörige Trägerstruktur. Der Haltekörper 1 weist als Lagerung und Durchführung für Strangelemente eine muldenartige Vertiefung 3 auf, die sich ähnlich einer V-Form am Grund verjüngt, wobei sich in der Vertiefung 3 ein Bündel aus drei Kabeln 5 befindet, die von einer oberen Öffnung 7 her eingelegt sind. Die Fig. 1 zeigt den geöffneten Zustand des Haltekörpers 1, wobei eine Abdeckeinrichtung 9 in eine die Öffnung 7 freigebende Stellung geschwenkt ist. Die Fig. 2 zeigt den geschlossenen Zustand, bei dem die Abdeckeinrichtung 9 die Öffnung 7 verschließt und durch Verhaken eines an einer Rastzunge 11 befindlichen Vorsprungs 13 mit einem Rasthaken 15 gesichert ist, der sich am oberen Rand des Haltekörpers befindet. Dem genannten Stand der Technik entsprechend weist die Abdeckeinrichtung 9 für das Aufbringen einer Haltekraft auf eingelegte Kabel 5 ein Andrückteil 17 auf, das für eine Spannbewegung relativ zum Hauptteil der Abdeckeinrichtung 9 entsprechend dem Stand der Technik durch ein im Inneren der Abdeckeinrichtung 9 befindliches, in Fig. 1 und 2 nicht sichtbares Federpaket vorgespannt ist. Dabei zeigt Fig. 1 die über den zur Verfügung stehenden Spannbereich voll ausgefahrene Position des Andrückteils 7, während Fig. 2 die die Haltekraft übertragende gespannte Position des Andrückteils 17 zeigt.

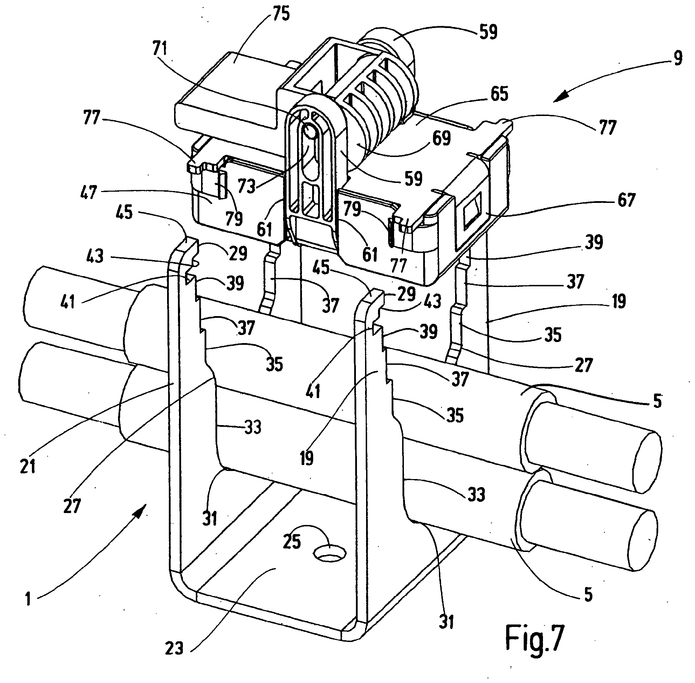

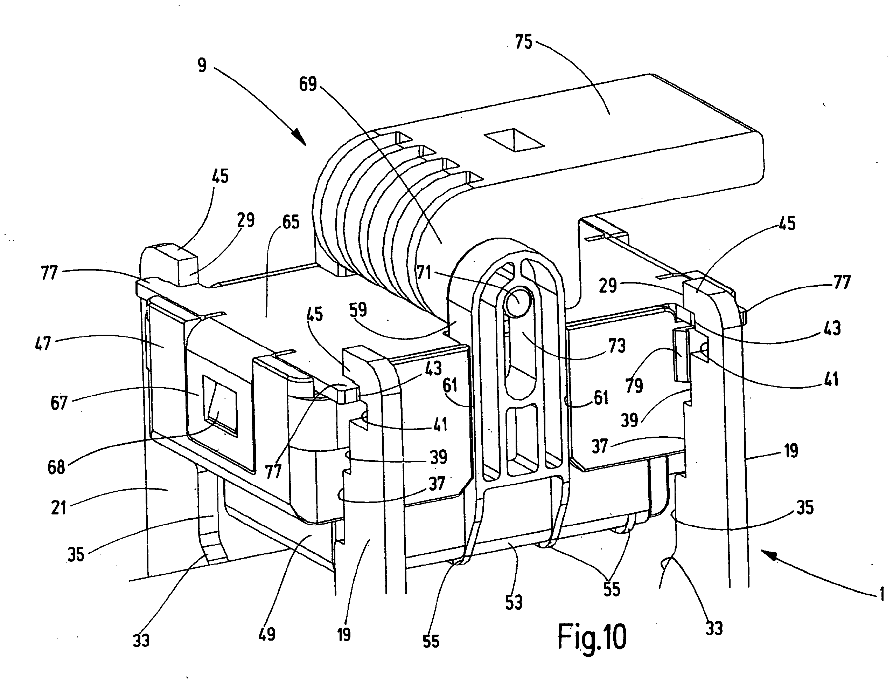

Bei der erfindungsgemäßen Einrichtung sind die jeweiligen Haltekörper 1 durch ein Gestell gebildet, das als Biegeteil aus Metallblech die Form eines U-Profilkörpers besitzt. Dieser weist als Lagerung für Strangelemente Lagerwangen 19 und 21 auf, die durch parallel zueinander verlaufende, ebenflächige Profilschenkel des U-Profils gebildet sind, die durch einen ebenfalls ebenflächigen, zu den Lagerwangen 19, 21 senkrecht verlaufenden Profilsteg 23 miteinander verbunden sind. Dieser dient als Anbringfläche für die Verbindung des betreffenden Haltekörpers 1 mit der (nicht dargestellten) Trägerstruktur, beispielsweise mit Hilfe von Befestigungslöchern 25 im Steg 23. Für die Bildung von Anlageflächen für eingelegte Strangelemente weist die Lagerung in den Lagerwangen 19, 21 jeweils eine Ausnehmung 27 auf, die von einer am freien Ende der Lagerwangen 19, 21 befindlichen Öffnung 29 ausgehend die Form einer Mulde besitzen, deren Weite sich zum Muldengrund 31 hin in der Art einer V-Form verjüngt. In dem an dem Muldengrund 31 anschließenden Bereich bildet der Rand der Vertiefungen 27 Anlageflächen 33 und 35 für eingelegte Strangelemente, von denen in den Fig. 7 bis 9 zwei Kabel 5 sichtbar sind. An die oberen Anlageflächen 35 anschließend, in Richtung auf die Öffnung 29 hin, sind die Ausnehmungen 27 in Stufen erweitert, wobei zueinander parallele und vertikal in Richtung auf den Profilsteg 23 verlaufende Stufenflächen 37 und 39 gebildet sind. An die oberen Stufenflächen 39 anschließend sind in den Ausnehmungen 27, wie am deutlichsten aus Fig. 10 zu ersehen ist, als weitere, die Ausnehmungen 27 erweiternde Stufen, Vertiefungen 41 und 43 gebildet. An letztere anschließend, und die obere Öffnung 29 der Ausnehmungen 27 begrenzend, sind an den Lagerwangen 19, 21 gegeneinander vorspringende Hakenteile 45 gebildet, die, wie aus Fig. 10 ersichtlich und unten näher ausgeführt ist, die Abdeckeinrichtung 9 durch formschlüssigen Übergriff in angebrachter Position am Haltekörper 1 festlegen.

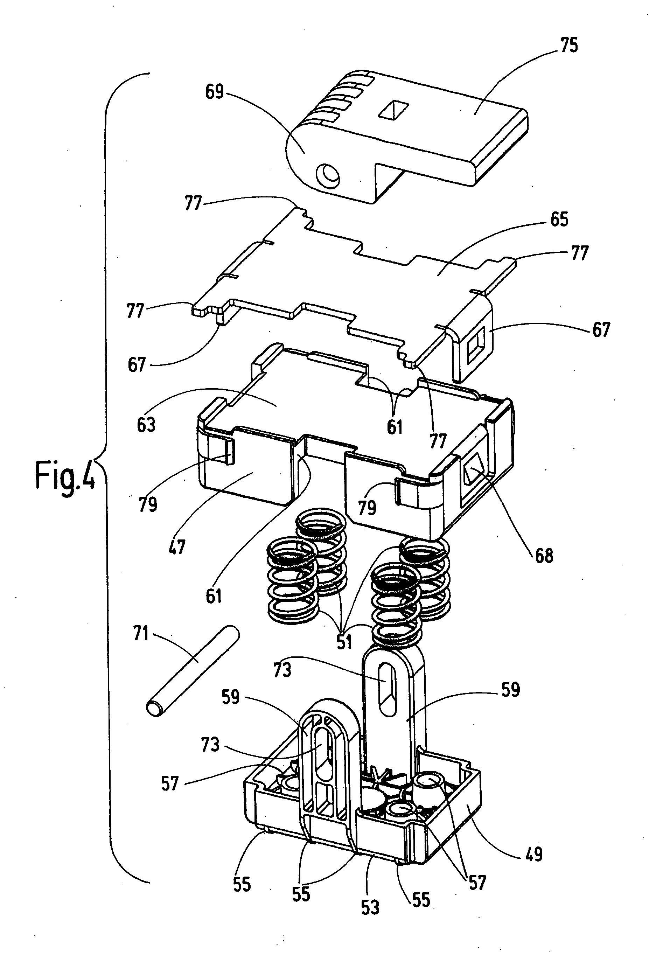

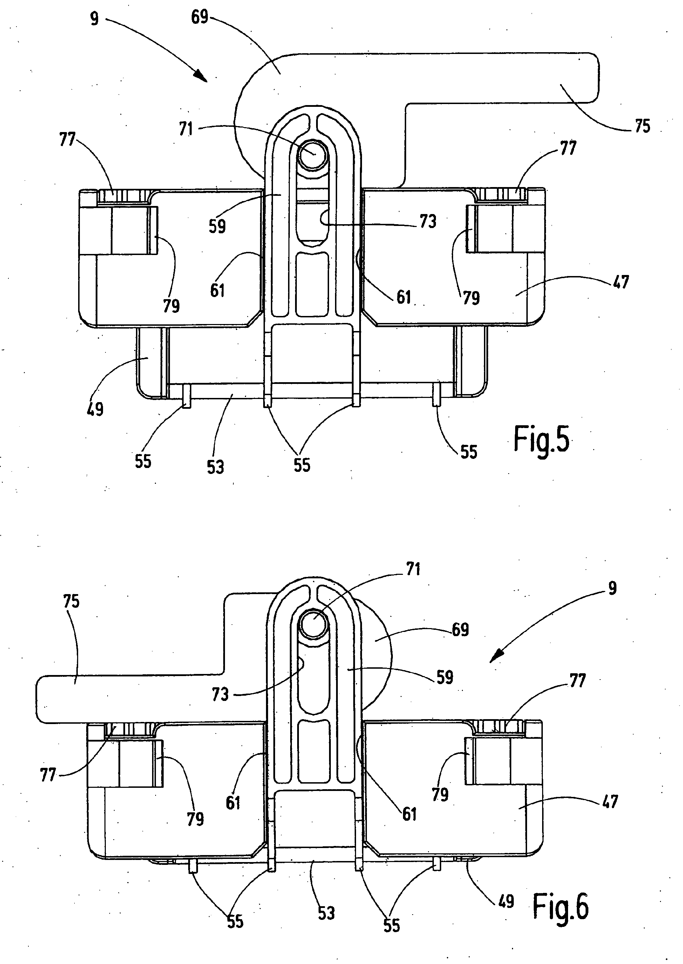

Wie am deutlichsten den Fig. 4 bis 6 entnehmbar ist, weist die Abdeckeinrichtung 9, deren Einzelteile in Fig. 4 in auseinandergezogener Explosionsdarstellung gezeigt sind, ein Hauptteil 47 und ein Andrückteil 49 auf, welches für eine Hubbewegung über einen Spannbereich relativ zum Hauptteil 47 bewegbar ist. Für diese Hubbewegung ist das Andrückteil 49 in der dem erwähnten, einschlägigen Stand der Technik entsprechenden Weise mittels eines Pakets aus vier Druckfedern 51 vorgespannt. Die Fig. 5 zeigt das Andrückteil 49 in der voll ausgefahrenen Spannstellung, während in Fig. 6 das Andrückteil 49 gegen die Wirkung der Druckfedern 51 eingezogen und in dieser Position verriegelt ist. Das Hauptteil 47 hat die Form eines im großen Ganzen rechteckförmigen Schalenteils, das in Richtung auf das Andrückteil 49 offen ist. Das Andrückteil 49 besitzt ebenfalls eine dem Hauptteil 47 angepasste Schalenform, wobei der Schalenboden außenseitlich den Drücker 53 bildet, der mit vorspringenden Rippen 55 die Haltekraft auf Strangelemente ausübt. Die Schale des Andrückteils 49 ist an den inneren Schalenwänden des Hauptteils 47 für Hub- oder Spannbewegungen geführt und bildet zusammen mit der Schale des Hauptteils 47 das Federgehäuse für die in den vier Eckbereichen auf Zapfen 57 sitzenden Druckfedern 51. Hauptteil 47 und Andrückteil 49 sind jeweils einstückig ausgebildet, beispielsweise durch Spritzformen vorzugsweise aus einem thermoplastischen Kunststoff.

Das Andrückteil 49 weist an seinen Langseiten einander gegenüberliegende Ansätze 59 auf, die sich senkrecht von der den Drücker 53 bildenden Bodenfläche weg erstrecken. Die Ansätze 59 bilden zum einen Führungskörper für die Hub- und Spannbewegungen des Andrückteils 49 als auch Bestandteil der Verriegelungseinrichtung. Für die Führungsfunktion sind die Ansätze 59 in Führungsbahnen 61 geführt, die an den Langseiten des Hauptteils 47 ausgebildet sind, das sich bei an der Lagerung des Haltekörpers 1 angebrachter Position in Axialrichtung der Strangelemente von Lagerwange 19 zu Lagerwange 21 erstreckt. Als Funktionsteile der Verriegelungseinrichtung erstrecken sich die Ansätze 59 über die Oberseite 63 des Hauptteils 47 hinaus, auf der sich eine ebene Deckplatte 65 aus Metallblech befindet, die mittels abgebogener Laschen 67 mit an den Stirnseiten des Hauptteils 47 befindlichen Nasen 68 verclipst ist.

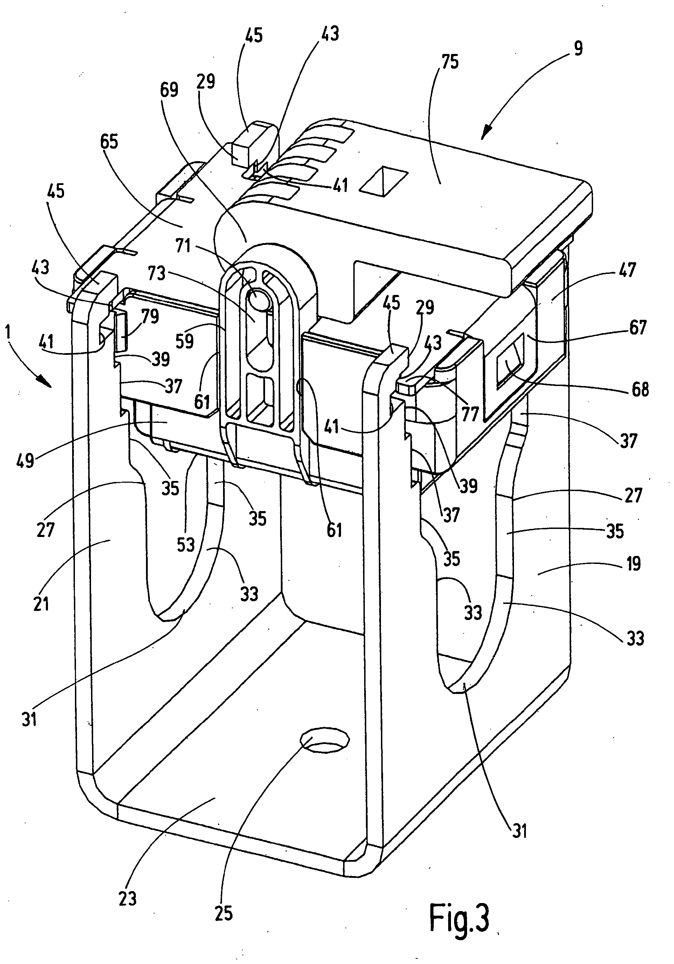

Hauptteile der Verriegelungseinrichtung sind neben den Ansätzen 59 ein Exzenter 69 mit einer Exzenterwelle 71. Für die Exzenterwelle 71 des Exzenters 69, der zwischen den Ansätzen 59 bewegbar ist, ist in den Ansätzen 59 jeweils ein Langloch 73 ausgebildet. Dieses verläuft in Richtung der Hubbewegung des Andrückteils 49 über eine Wegstrecke, die der vollen Hublänge oder dem Spannbereich des Andrückteils 49 entspricht. Unter der Wirkung der Federvorspannung liegt die Exzenterwelle 71, die mit ihren Enden in die Langlöcher 73 eingreift, am oberen Ende der Langlöcher 73 an. Wenn der mittels eines angeformten Handhebels 75 drehbare, sich auf der Deckplatte 65 abstützende Exzenter 69 in die in Fig. 3,5 und 10 gezeigte Freigabe- oder Entriegelungsposition gedreht ist, befindet sich die Exzenterwelle 71 in der der Deckplatte 65 angenäherten Position, bei der das Andrückteil 49 durch die Wirkung der Druckfedern 51 ausfahrbar ist. Bei der um 180° demgegenüber verdrehten Verriegelungsposition, bei der die Exzenterwelle 71 den größten Abstand von der Deckplatte 65 besitzt, ist das Andrückteil 49 gegen die Federwirkung eingezogen, siehe insbesondere Fig. 6, und verriegelt.

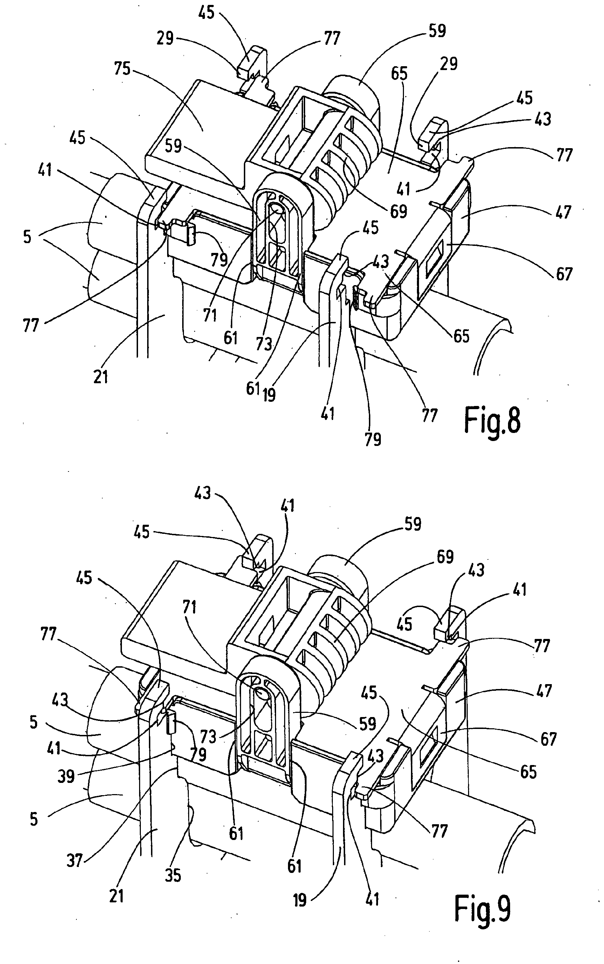

Die Fig. 7 bis 10 verdeutlichen die Funktionsweise der erfindungsgemäßen Einrichtung, wobei Fig. 7 den Beginn eines Anbringvorgangs der Abdeckeinrichtung 9 zum Verschließen der Öffnung 29 des Haltekörpers 1 zeigt, in dem zwei Strangelemente in Form von Kabeln 5 eingelegt sind. Für die formschlüssige Festlegung der Abdeckeinrichtung 9 an den Lagerwangen 19, 21 weist die Deckplatte 65 der Abdeckeinrichtung 9 in den Eckbereichen seitlich auskragende Halteflügel 77 auf. Um die Abdeckeinrichtung 9 in die in Fig. 9 und 10 gezeigte, endgültige Anbringposition zu bringen, bei der die oberen Hakenteile 45 die Deckplatte 65 der Abdeckeinrichtung 9 formschlüssig übergreifen, wird diese, ausgehend von der in Fig. 7 gezeigten Position, in Axialrichtung der Kabel 5, zu den Lagerwangen 19, 21 versetzt, durch die Öffnung 29 zwischen die Lagerwangen 19, 21 eingeführt, bis die Flügel 77 mit den Vertiefungen 41 der Lagerwangen 19, 21 fluchten.

Bei in der Verriegelungsposition befindlichem Exzenter 69 erfolgt dieses Einführen bei eingezogenem Andrückteil 49 ohne Kraftaufwand in die in Fig. 8 gezeigte Position. Aus dieser wird die Abdeckeinrichtung 9 axial so verschoben, dass die Flügel 77 in die Vertiefungen 41 eintreten, siehe Vergleich der Fig. 8 und 9, bis bei Erreichen der ausgerichteten Anbringposition (Fig. 9) Rastnasen 79, die an den Seitenwänden des Hauptteils 47 nachgiebig vorspringen, an den Innenseiten der Lagerwangen 19, 21 einrasten. Wenn bei dieser Ausrichtposition der Exzenter 69 in die Freigabe- oder Entriegelungsposition gedreht wird, bewegt die Vorspannung das Andrückteil 49 bis zur Anlage an den Kabeln 5, so dass die zwischen diesem und dem Hauptteil 47 wirkende Federkraft das Hauptteil 47 in die in Fig. 10 gezeigte Anbringposition anhebt, in der die Hakenteile 45 die Flügel 77 übergreifen. Die Flügel 77 sind, wie am deutlichsten aus den Fig. 4, 7 und 8 zu ersehen ist, gestuft und in ihrer Länge so bemessen, dass die äußere Stufe durch die untere Vertiefung 41 der Lagerwangen 19, 21 hindurchtreten kann, nicht jedoch durch die obere Vertiefung 43. Bei an eingelegten Strangelementen abgestütztem Andrückteil 49 und dadurch mittels der Federkraft angehobenem Hauptteil 47 liegt daher die am weitesten auskragende Stufe der Flügel 77, über den Grund der Vertiefungen 43 vorstehend, an den Außenseiten der Lagerwangen 19, 21 an, um die Abdeckeinrichtung 9 axial zu sichern.

Für die Demontage der Abdeckeinrichtung 9 wird in Entsprechung so vorgegangen, dass das Andrückteil 49 verriegelt wird, so dass die Abdeckeinrichtung 9 ohne Kraftaufwand nach unten bewegbar ist, um die Flügel 77 auf die Vertiefungen 41 auszurichten. Dadurch kann die Axialverschiebung erfolgen, bis nach Durchtritt der Flügel 77 durch die Vertiefungen 41 die Abdeckeinrichtung 9 zum Abnehmen frei ist.

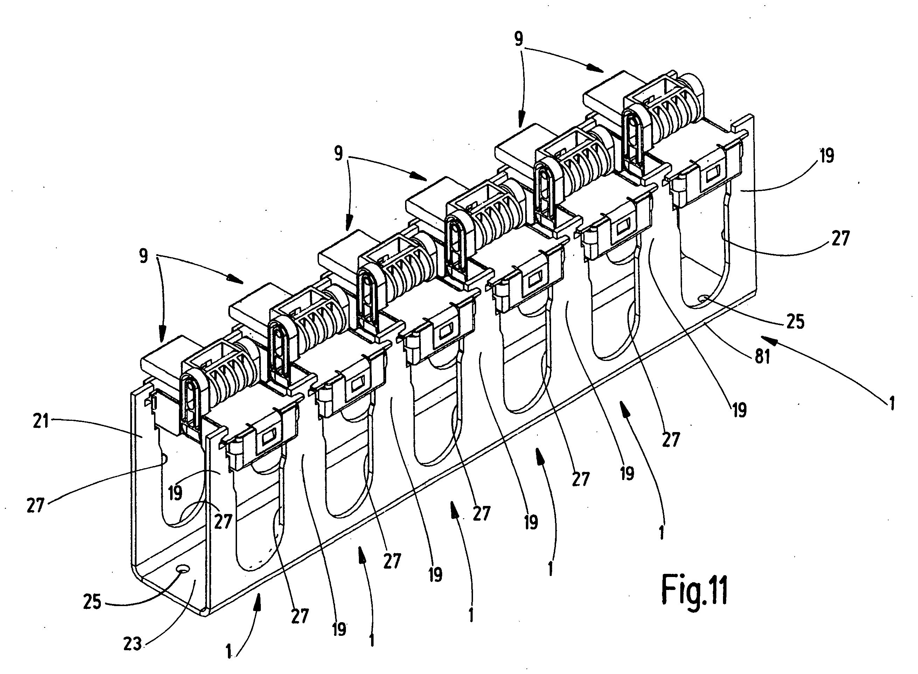

Die Fig. 11 zeigt eine Ausführungsform der erfindungsgemäßen Einrichtung, bei der das durch ein U-Profil gebildete Gestell für mehrere miteinander zusammenhängende Haltekörper, im gezeigten Beispiel für sechs Haltekörper 1, zu einer Profilleiste 81 verlängert ist. Wie bei der zuvor beschriebenen Ausführungsform bilden die durch den Profilsteg 23 miteinander verbundenen Profilschenkel die Lagerung bildende Ausnehmungen 27, die gleichartig geformt sind, wie zuvor beschrieben.

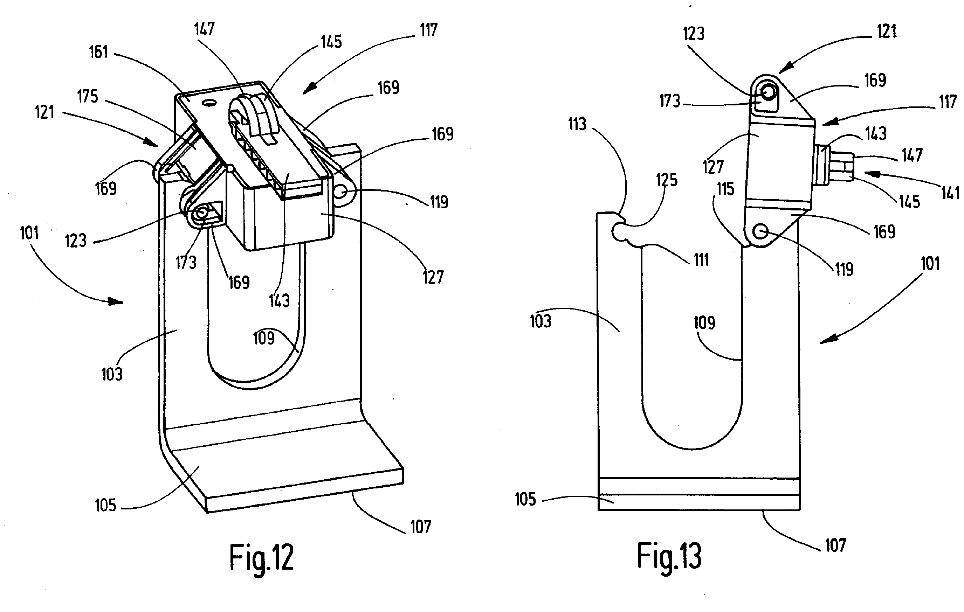

In den Fig. 12 bis 19 ist von einem weiteren Ausführungsbeispiel ebenfalls nur ein Haltekörper 101 dargestellt. Für die Fixierung und Führung mehrerer Bündel von Strangelementen, wie Kabelbündeln bei Windkraftanlagen, kann eine entsprechende Anzahl von Haltekörpern 101 vorgesehen und an der betreffenden Trägerstruktur, wie einem Turmsegment, angebracht sein. Dabei können die Haltekörper 101 entsprechend der Art und Form des Anbringbereichs an der Trägerstruktur in gerader Aufeinanderfolge nebeneinander angeordnet sein oder in einem bogenförmigen Verlauf. Bei dem in den Fig. 12 bis 19 gezeigten Ausführungsbeispiel sind die Haltekörper 101 durch ein Biegeteil gebildet, das aus einer rechteckförmigen Stahlblechplatte derart gebogen ist, dass ein erstes Plattenteil 103 gebildet ist, von dem ein kürzeres, zweites Plattenteil 105 rechtwinklig abgebogen ist. Das zweite Plattenteil 105 bildet eine ebene Anbringfläche 107 für die Verbindung mit der betreffenden Trägerstruktur, beispielsweise durch Verschrauben mittels nicht dargestellter Schraubenlöcher im zweiten Plattenteil 105. Das erste Plattenteil 103 bildet für einzulegende Strangelemente einen Strangaufnahmeraum in Form einer U-förmigen Vertiefung 109, die an dem dem zweiten Plattenteil 105 entgegengesetzten oberen Ende eine Einlegeöffnung 111 aufweist, die von Öffnungsrändern 113 und 115 begrenzt ist. Bei einer Mehrzahl geradlinig aufeinanderfolgender Haltekörper 101 kann das Blechbiegeteil zu einer die Anzahl der Haltekörper bildenden Winkelprofilschiene verlängert sein, in der die Vertiefungen 109 in dem das erste Plattenteil 103 ausbildenden Profilschenkel aufeinanderfolgend ausgebildet sind.

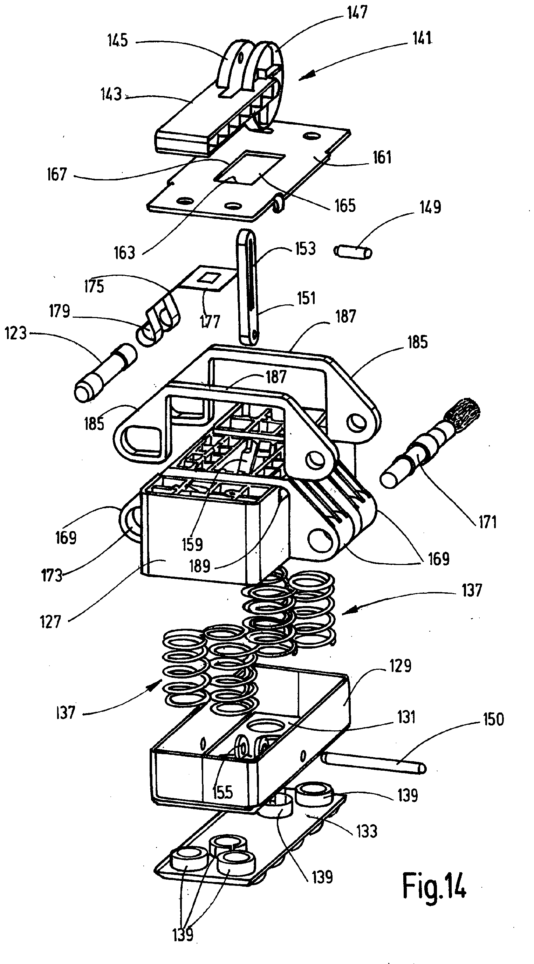

In den Fig. 12 und 13, in denen der Haltekörper 101 jeweils ohne in die den Strangaufnahmeraum bildende Vertiefung 109 eingelegte Strangelemente dargestellt ist, zeigen die Abdeckeinrichtung 117 in einer die Öffnung 111 der Vertiefung 109 schließenden Stellung (Fig. 12) bzw. in einer die Öffnung 111 freigebenden Offenstellung (Fig. 13). Dabei befindet sich eine der Abdeckeinrichtung 117 zugehörige Verriegelungseinrichtung jeweils in ihrer Verriegelungsstellung. Die näheren Einzelheiten der Abdeckeinrichtung 117 und ihrer Verriegelungseinrichtung sind in den Fig. 14 bis 16 näher dargestellt. Für das Überführen zwischen Offenstellung und Schließstellung ist die Abdeckeinrichtung für eine Schwenkbewegung mittels einer Schwenklagerung 119 am Öffnungsrand 115 des Plattenteils 103 des Haltekörpers 101 angelenkt. Zur Bildung einer lösbaren Verbindung der in der Schließstellung befindlichen Abdeckeinrichtung 117 mit dem anderen Öffnungsrand 113 ist an der Abdeckeinrichtung 117, der Schwenklagerung 119 gegenüberliegend, eine lösbare Riegelanordnung 121 vorgesehen, die einen Riegelbolzen 123 aufweist, der für eine Bewegung zwischen einer Riegelstellung, in der er mit einem Riegelhaken 125 am Öffnungsrand 113 in formschlüssigem Eingriff ist, und einer davon zurückgezogenen Entriegelstellung lageverstellbar ist.

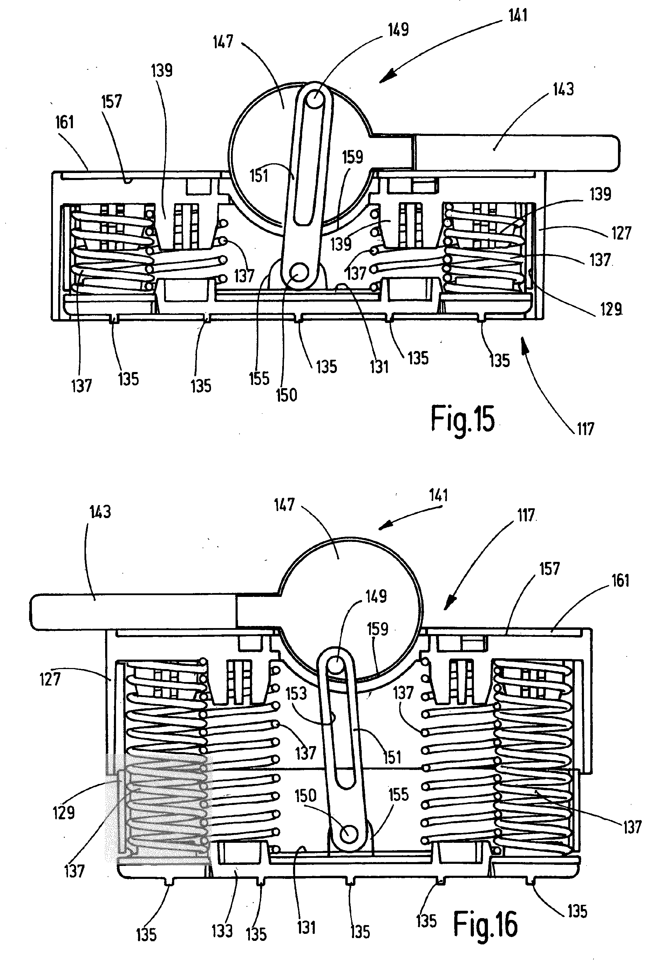

Wie Fig. 14 bis 16 zeigen, weist die Abdeckeinrichtung 117 als Hauptteil ein Schalenteil 127 auf, das rechteckförmig und in Richtung auf ein Andrückteil offen ist, das die Haltekraft auf zu fixierende Strangelemente überträgt. Dieses Andrückteil ist durch ein zweites Schalenteil 129 gebildet, das in der Form dem ersten Schalenteil 127 angepasst ist und in diesem teleskopartig bewegbar ist, so dass es, wie der Vergleich der Fig. 15 und 16 zeigt, eine Hubbewegung zwischen ausgeschobenen Spannstellungen oder einer eingezogenen Stellung ausführen kann, die in Fig. 15 gezeigt ist und in der das das Andrückteil bildende zweite Schalenteil 129 mittels einer Verriegelungseinrichtung sicherbar ist. Der Boden 131 des zweiten Schalenteils 129 bildet den Drücker, der über eine an der Außenseite des Bodens 131 anliegende, plattenförmige Schonunterlage 133 mit den zu fixierenden Strangelementen zusammenwirkt. Die Schonunterlage 133 weist eine äußere Konturierung mit vorstehenden Noppen 135 auf. Erstes Schalenteil 127, zweites Schalenteil 129 sowie Schonunterlage 133 sind spritzgeformte Kunststoffteile. Zur Erzeugung der auf das zweite Schalenteil 129 einwirkenden Spannkraft ist in dem innerhalb der Schalenteile 127, 129 gebildeten Innenraum ein Federpaket aus sechs Schraubendruckfedern 137 angeordnet, von denen je eine in jedem Eckbereich der Rechteckform und je eine auf der Längsmittenlinie der Rechteckform angeordnet ist, wobei die Druckfedern 137 auf Zapfen 139 positioniert sind, die von der Schonunterlage 133 und von der Innenseite des ersten Schalenteils 127 vorspringen.

Die Verriegelungseinrichtung, mittels der das das Andrückteil bildende zweite Schalenteil 129 gegen die Wirkung des Federpakets in der unter anderem in Fig. 15 gezeigten, zurückgezogenen Stellung sicherbar ist, weist einen Exzenter 141 auf, der mittels eines Handhebels 431 manuell drehbar ist. Der Exzenter 141 ist zusammen mit dem Handhebel 143 durch ein einteiliges Kunststoffteil gebildet, das ein aus zwei Kreisscheiben 145 und 147 gebildetes Zylinderteil besitzt, von dem sich der Handhebel 143 auskragend erstreckt. Die Kreisscheiben 145, 147 sind in einem Abstand voneinander angeordnet. Durch den so gebildeten Zwischenraum erstreckt sich ein Kurbelzapfen 149 hindurch, der an einer zur Zylinderachse radial versetzten Stelle positioniert ist und dadurch bei Drehung der Kreisscheiben 145, 147 eine Hubbewegung ausführt. Zur Übertragung der Hubbewegung des Kurbelzapfens 149 auf das das Andrückteil bildende zweite Schalenteil 129 ist eine Pleuelstange 151 vorgesehen, die in den Zwischenraum zwischen den Kreisscheiben 145, 147 eingreift und ein Langloch 153 aufweist, in das der Kurbelzapfen 149 eingreift. Das dem zweiten Schalenteil 129 zugewandte Ende der Pleuelstange 151 ist mit einem Gelenkbolzen 150 an einem Lagerbock 155 angelenkt, der am Bodenteil 131 des zweiten Schalenteils 129 angeformt ist.

Die Fig. 16 zeigt den Exzenter 141 in einer dem Freigabezustand des Andrückteils entsprechenden Drehposition, bei der sich der Kurbelzapfen 149 unterhalb der Oberseite 157 des durch das erste Schalenteil 127 gebildeten Andrückteils befindet und der Handhebel 143 auf dem in Fig. 16 linksseitig gelegenen Teil der Oberseite 157 aufliegt. Bei Drehen um 180° in die in Fig. 15 gezeigte Drehposition, bei der der Handhebel 143 auf der rechtsgelegenen Seite aufliegt, und sich der Kurbelzapfen 149 in der angehobenen Position befindet, ist das das Andrückteil bildende zweite Schalenteil 129 in der zurückgezogenen Position gegen die durch die Druckfedern 137 erfolgte Federkraft verriegelt. Wie aus Fig. 15 ersichtlich, befindet sich bei dieser Drehposition der Kurbelzapfen 149 gegenüber der Achse der Hubbewegung seitlich versetzt, also in einer überzentrischen Lage, so dass die Verriegelungseinrichtung durch die wirkende Federkraft im Verriegelungszustand gesichert ist.

Wie am deutlichsten aus Fig. 15 und 16 ersichtlich ist, ist an der Oberseite 157 des das Hauptteil bildenden ersten Schalenteils 127 eine kreisbogenförmig gewölbte Mulde 159 ausgebildet, die eine Art Lagersitz bei der Drehbewegung der Kreisscheiben 145, 147 bildet. Auf der Oberseite 157 des ersten Schalenteils 127 befindet sich eine Deckplatte 161 aus Metallblech, in deren Zentralbereich, wie aus Fig. 14 ersichtlich ist, eine rechteckförmige Ausnehmung 163 ausgespart ist, die die Mulde 159 umgibt. Die längsverlaufenden Seitenränder 165 und 167 der Ausnehmung 163 bilden für die in die Mulde 159 eingreifenden Kreisscheiben 145, 147 eine seitliche Führung, so dass der Exzenter 141 in Verbindung mit der durch die Mulde 159 gebildeten Drehlagerung in definierter Position auf der Oberseite 157 gesichert ist.

Für die Verbindung mit den Öffnungsrändern 113 und 115 an der Einlegeöffnung 111 des Haltekörpers 101 sind an zwei entgegengesetzten Seiten des ersten Schalenteils 127 Arme 169 angeformt, zwischen denen sich ein den Eingriff des Endbereichs des ersten Plattenteils 103 des Haltekörpers 101 ermöglichender Zwischenraum befindet. Das in Fig. 12 und 13 rechts gelegene Paar der Arme 169 ist mittels eines die Schwenklagerung 119 bildenden Schwenkbolzens 171 (Fig. 14) neben dem Öffnungsrand 115 am ersten Plattenteil 103 angelenkt. Das andere, der Riegelanordnung 121 zugeordnete Paar der Arme 169 weist ein Langloch 173 auf, in dem ein Riegelbolzen 173 der Riegelanordnung 121 zwischen einer Riegelstellung, in der er mit dem Riegelhaken 125 am Öffnungsrand 113 verrastet ist, und einer zurückgezogenen Riegelstellung bewegbar ist, wobei eine den Riegelbolzen 123 in die Riegelstellung vorspannende Betätigungsfeder 175 vorgesehen ist. Diese weist, wie Fig. 14 zeigt, ein Festlegeteil 177 auf, das am ersten Schalenteil 127 unterhalb der Deckplatte 161 festgelegt ist, sowie am anderen Ende eine Lasche 179 auf, die den Zentralbereich des Riegelbolzens 123 umfasst. Dadurch bildet die Feder 175 eine Betätigungseinrichtung, die einerseits die Vorspannung des Riegelbolzens 123 erzeugt, andererseits jedoch zwischen den Armen 169 für manuelle Betätigung zugänglich ist, wie Fig. 12 zeigt, und dadurch das Zurückziehen des Riegelbolzens 123 in die Entriegelstellung ermöglicht. Die Fig. 14 zeigt, dass die Arme 169 seitlich durch Blechteile 185 eingefasst und armiert sind, die über Stege 187 miteinander verbunden sind, die in Nuten 189 in der Oberseite 157 des ersten Schalenteils 127 verlaufen.

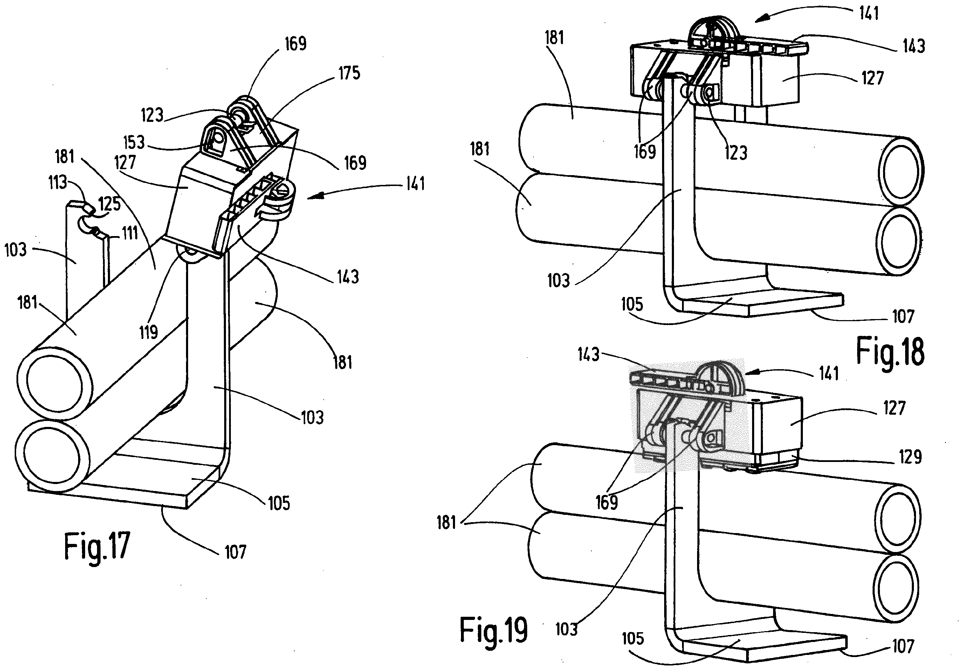

Die Fig. 17 bis 19 verdeutlichen den Ablauf des Festlegevorgangs für zwei Kabel 181. Die Fig. 17 zeigt die Abdeckeinrichtung 117 in der in die Offenstellung geschwenkten Position, wobei das Andrückteil in der zurückgezogenen Position verriegelt ist. Bei dem in Fig. 18 gezeigten Zustand ist die Abdeckeinrichtung 119 bereits in der die Einlegeöffnung 111 verschließenden Position, wobei das Andrückteil weiterhin verriegelt ist, so dass, da keine Federkraft am Andrückteil wirksam ist, das Schwenken in die Schließstellung ohne Kraftaufwand erfolgt ist. Die Fig. 19 schließlich zeigt den Endzustand, bei dem das Andrückteil nach Entriegeln der Verriegelungseinrichtung für die Spannbewegung freigegeben ist und die Haltekraft auf die eingelegten Kabel 181 ausübt.

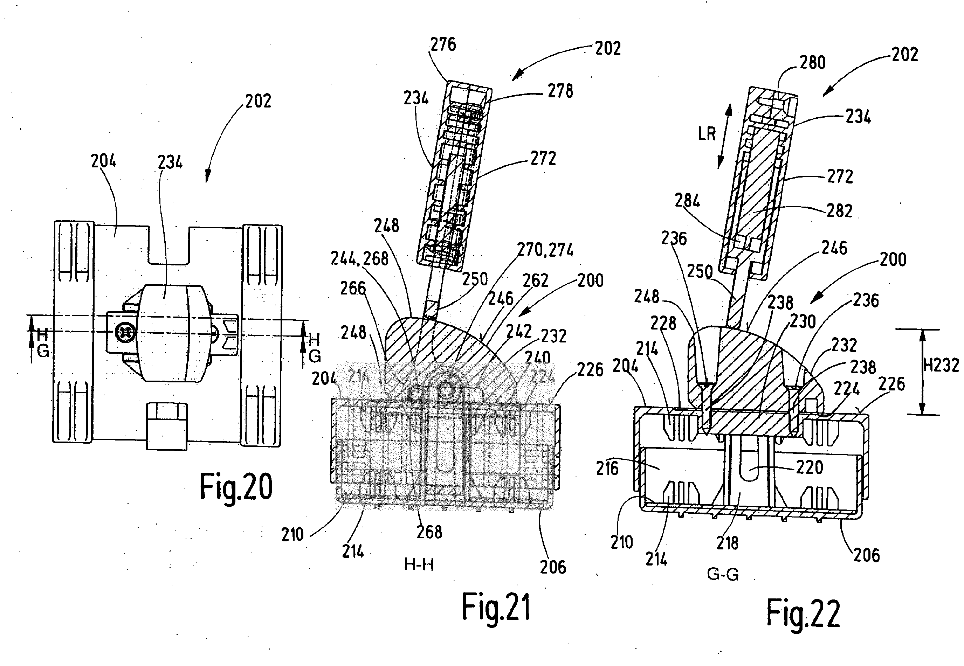

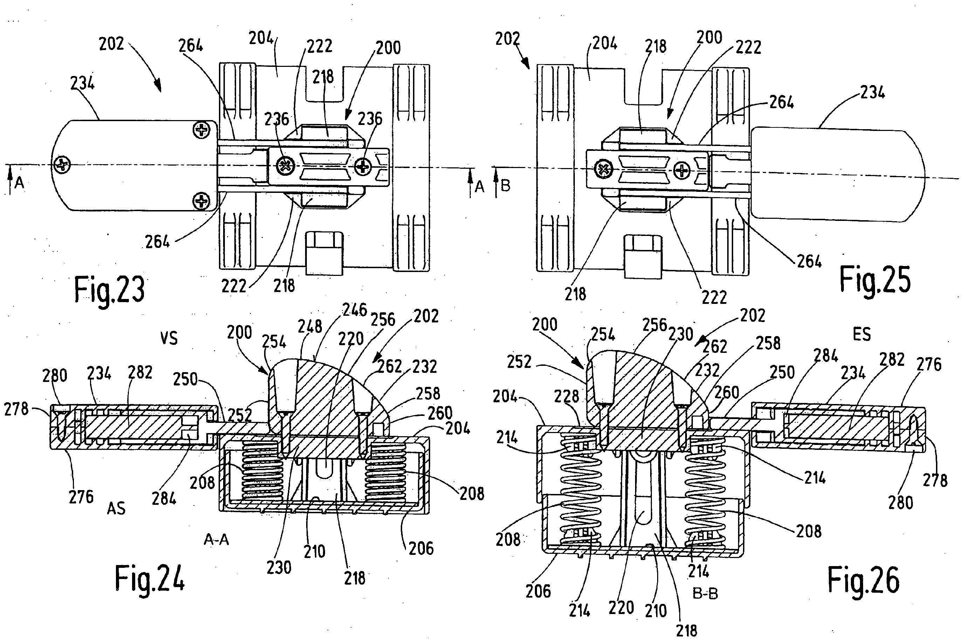

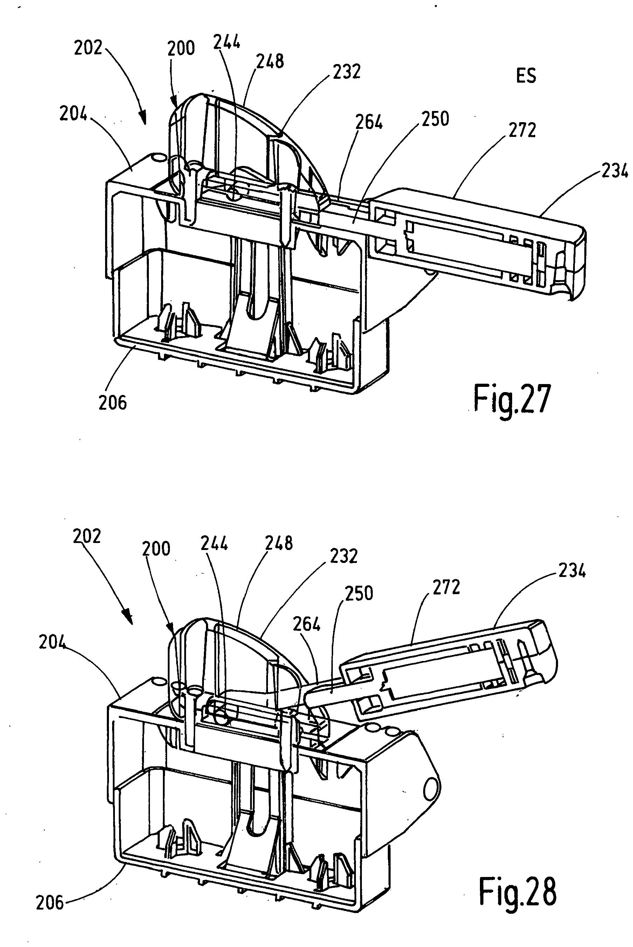

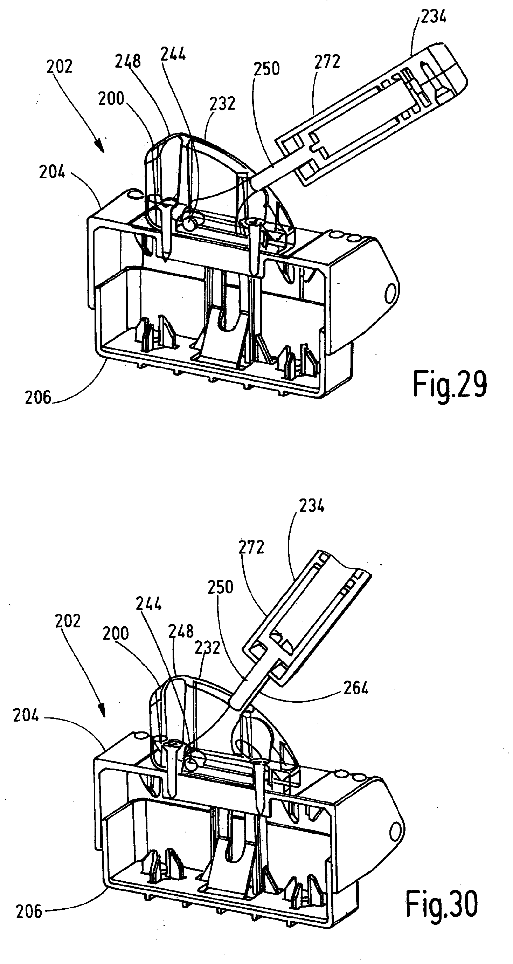

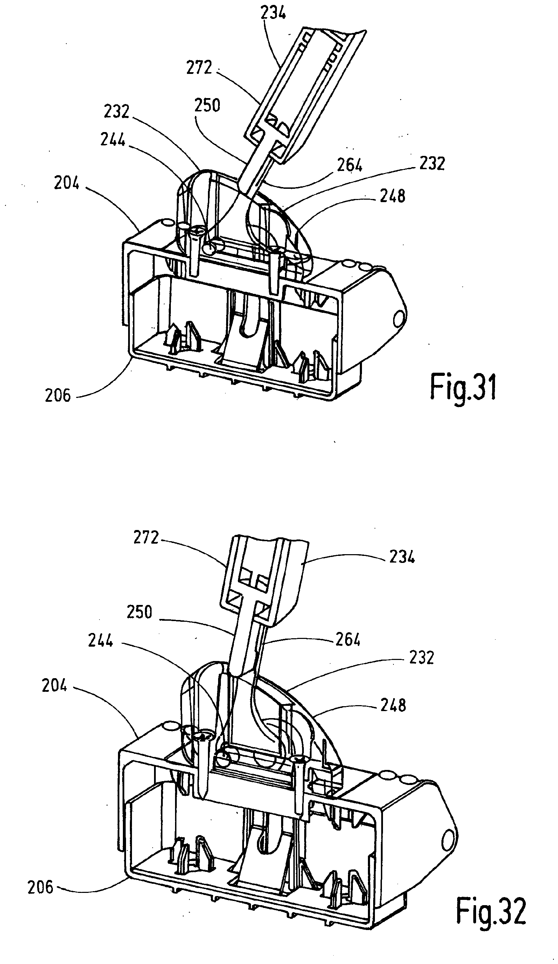

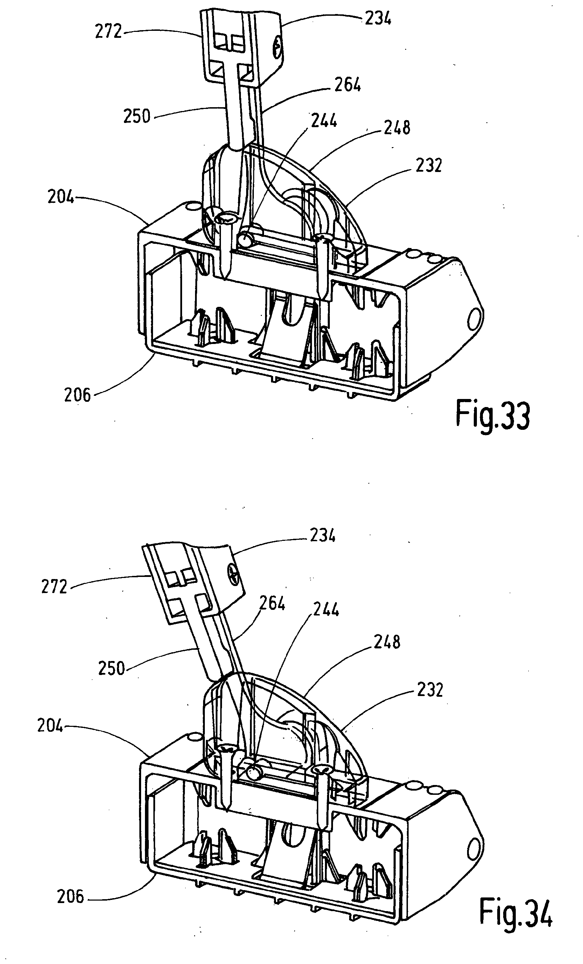

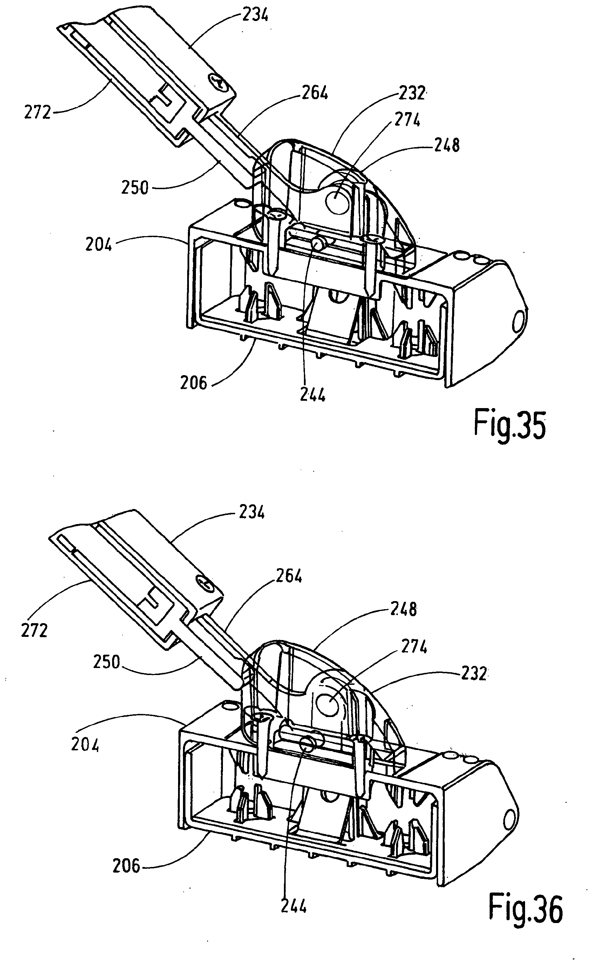

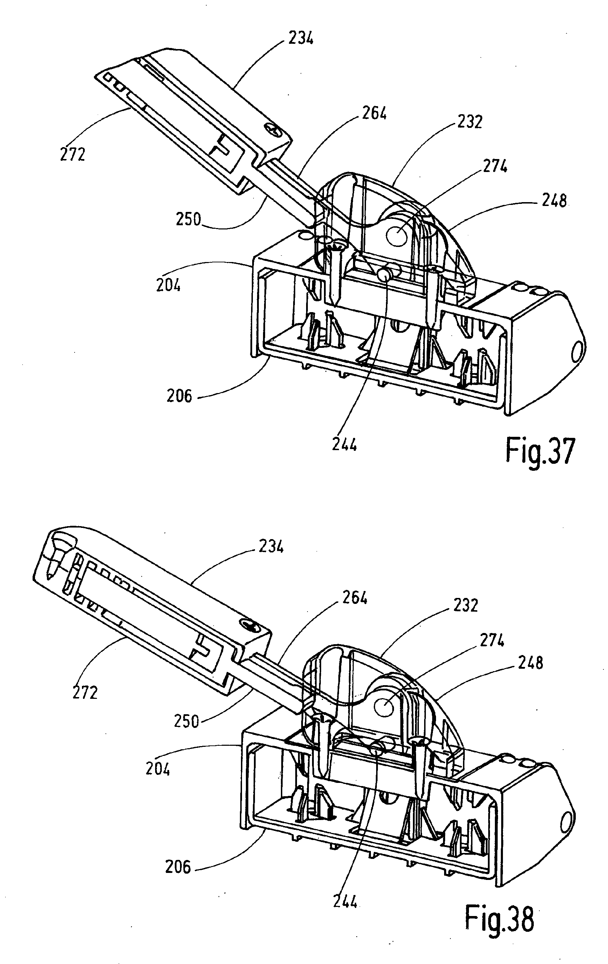

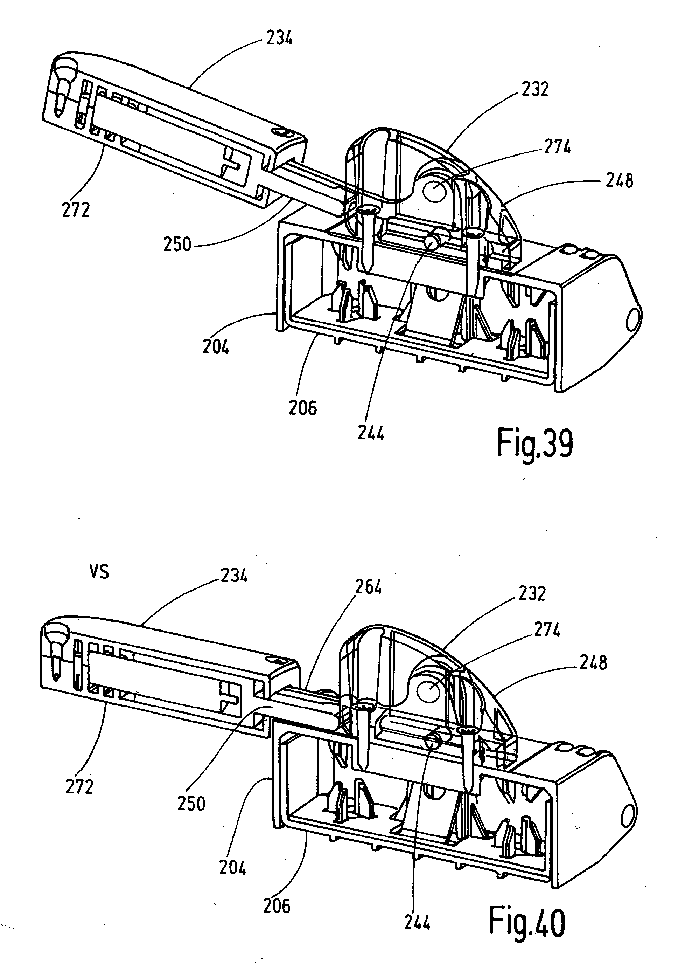

Eine weitere Alternative der Verriegelungseinrichtung 200 einer erfindungsgemäßen Abdeckeinrichtung 202 ist in den Fig. 20 bis 40 gezeigt. Wie auch bei den vorangegangenen Ausführungsformen ist ein schalenförmiges Hauptteil 204 vorgesehen, in dem ein ebenfalls schalenförmiges Andrückteil 206 teleskopartig verschiebbar angeordnet ist. Das Hauptteil 204 und das Andrückteil 206 sind rechteckig ausgebildet und es sind vier Energiespeicher 208 vorgesehen, welche die Teile 204, 206 voneinander beabstanden.

Zur Aussteifung ist in das Andrückteil 206 eine Bodenplatte 210 eingelegt, welche Ausnehmungen für die die Energiespeicher 208 positionierenden Zapfen 214 aufweist. Weiterhin ragen im Inneren 216 des Andrückteils 206 zwei parallel angeordnete Ansätze 218 mit Langlöchern 220 in Richtung des Hauptteils 204 empor und durchgreifen Öffnungsschlitze 222 des Hauptteils 204.

Zwischen den Schlitzen 222 des Hauptteils 204 ist eine Ausnehmung 224 auf der Oberseite 226 des Hauptteils 204 vorgesehen. In dieser Ausnehmung 224 ist eine streifenförmige Lagerplatte 228 angeordnet. Darüber hinaus weist das Hauptteil 204 zwischen den Schlitzen 222 ein verdicktes Mittelteil 230 auf. Auf der Oberseite 226 des Hauptteils 204 ist ein Führungsteil 232 für einen Betätigungshebel 234 vorgesehen. Das Führungsteil 232 ist über zwei parallel angeordnete Schraubbolzen 236 am Mittelteil 230 des Hauptteils 204 befestigt, wobei die Schraubbolzen 236 Öffnungen 238 in der Lagerplatte 228 durchgreifen. An seiner Unterseite 240 weist das Führungsteil 232 seitlich zwei absatzförmige Ausnehmungen 242 für weiter unten beschriebene Lagerzapfen 244 auf. An seiner Oberseite 246 ist das Führungsteil 232 mit einer asymmetrisch geformten, abgerundeten Führungsfläche 248 für ein Riegelteil 250 versehen. Die Führungsfläche 248 verläuft entlang einer in der Bildebene linken Seitenfläche 252 und geht über eine Rundung 254 in einen gebogenen Flächenabschnitt 256 auf der Oberseite 246 des Führungsteils 232 und anschließend über eine weitere Rundung 258 in eine rechte Seitenfläche 260 des Führungsteils 232 über. Der gebogene mittlere Flächenabschnitt 256 hat eine maximale Höhe H232 in der Nähe der linken Seitenfläche 252 und verläuft dann mit einem im Querschnitt annähernd kreisabschnittsförmigen Verlauf 262 bis zur rechten Seitenfläche 260.

Weiterhin ist der Betätigungshebel 234 vorgesehen. Der Betätigungshebel 234 weist zwei Wangenteile 264 auf, die, parallel angeordnet, seitlich des Führungsteils 232 verlaufen und dort schwenkbar angelagert sind. Dazu weisen die Wangenteile 264 jeweils ein verdicktes Endteil 266 und eine in der Längsachse des Wangenteils 264 vorgesehene Bohrung 268 auf, in der der Lagerzapfen 244 befestigt ist, der sich auf der Lagerplatte 228 abstützt und auf dieser gleiten kann und der in der Ausnehmung 242 des Führungsteils 232 bewegbar ist. Exzentrisch zur Bohrung 268 für den Lagerzapfen 244 des jeweiligen Wangenteils 264 ist im Endteil 266 eine weitere Bohrung 270 vorgesehen, die sich in axialer Richtung des Wangenteils 264 zwischen der Bohrung 268 für den Lagerzapfen 244 und einem Betätigungsteil 272 befindet. In dieser weiteren Bohrung 270 ist ein Hebezapfen 274 befestigt, der in das Langloch 220 des benachbarten Ansatzes 218 des Andrückteils 206 eingreift, um das Andrückteil 206 entgegen der Wirkung der Energiespeicher 208 anzuheben und in der angehobenen Stellung AS zu verriegeln.

Das Betätigungsteil 272 des Betätigungshebels 234 weist zwei Schalenteile 276, 278 auf, die miteinander durch Schraubbolzen 280 verschraubt sind. Zwischen den Schalenteilen 276, 278 und den Wangenteilen 264 ist das Riegelteil 250 im Zentrum des Betätigungshebels 234 vorgesehen. Das Riegelteil 250 ist in Längsrichtung LR des Betätigungshebels 234 verschiebbar angeordnet und wird von einem weiteren Energiespeicher 282, insbesondere einer Gasdruckfeder oder einer Schraubendruckfeder, der im Betätigungsteil 272 angeordnet ist, in Richtung der Führungsfläche 248 des Führungsteils 232 beaufschlagt. Zudem ist das Riegelteil 252 kolbenförmig ausgebildet und bevorzugt mit einem Sackloch 284 zur Aufnahme und Führung des weiteren Energiespeichers 282 versehen.

Wenn der Betätigungshebel 234 von einer in der Bildebene rechten Entriegelungsstellung ES, in welcher das Andrückteil 206 relativ zum Hauptteil 204 verschiebbar ist, in eine linke Verriegelungsstellung VS verschwenkt wird, in welcher das Andrückteil 206 an das Hauptteil 204 herangezogen und in dieser Stellung AS gehalten ist, wird das Riegelteil 250 entlang der Führungsfläche 248 des Führungsteils 232 geführt. Dabei wird es durch die Führungsfläche 248 in das Betätigungsteil 272 entgegen der Wirkung des weiteren Energiespeichers 282 verschoben. Hierbei muss für eine Einschubbewegung eine zusätzliche Kraft von einer Bedienperson beim Verschwenken des Betätigungshebels 234 aufgewendet werden. Bei einer Ausschubbewegung des Riegelteils 250 aus dem Betätigungsteil 272 wird das Verschwenken des Betätigungshebels 234 zusätzlich zu der von Bedienperson aufgebrachten Kraft unterstützt. Hierbei werden Reibungskräfte, die durch das Schleifen des Riegelteils 250 über die Führungsfläche 248 auftreten, vernachlässigt.

Wenn der Betätigungshebel 234 von der Entriegelungsstellung ES in die Verriegelungsstellung VS verschwenkt wird, wird das Riegelteil 250 zunächst entlang der rechten Seitenfläche 260 des Führungsteils 232 verschoben, wobei das Riegelteil 250 ein kurzes Stück in das Betätigungsteil 272 hinein verschoben wird. Auf diese Weise muss ein Widerstand überwunden werden, um den Betätigungshebel 234 aus der Entriegelungsstellung ES zu bewegen. Ist dieser Widerstand überwunden, wird das Riegelteil 250 entlang der bogenförmigen Führungsfläche 248 des Führungsteils 232 verschoben. In diesem Verschwenkbereich wird das Riegelteil 250 in seiner Position relativ zum Betätigungsteil 272 gehalten oder mit zunehmendem Schwenkwinkel geringfügig in das Betätigungsteil 272 verschoben, so dass in diesem Verschwenkbereich der Verschwenkbewegung des Betätigungshebels 234 entweder keine Kraft oder nur eine sehr gering ansteigende Kraft durch das Riegelteil 250 entgegengesetzt wird. Sobald die maximale Höhe H232 des Führungsteils 232 überwunden ist, bewirkt der fallende Verlauf der Führungsfläche 248, dass das Riegelteil 250 aufgrund der Wirkung des weiteren Energiespeichers 282 wieder aus dem Betätigungsteil 272 heraus geschoben wird. Dies bewirkt, dass der Betätigungshebel 234 nach Überwinden der maximalen Höhe H232 des Führungsteils 232 allein aufgrund des Ausschubs des Riegelteils 250 weiter in die Verriegelungsstellung VS verschwenkt und schließlich in der Verriegelungsstellung VS satt gehalten wird.

Um den Betätigungshebel 234 aus der Verriegelungsstellung VS in die Entriegelungsstellung ES zu verschwenken, muss dann eine erheblich größere Kraft seitens der Bedienperson aufgewendet werden, um das Riegelteil 250 entlang der höheren linken Seitenfläche 252 des Führungsteils 232 zu verschieben und in das Betätigungsteil 272 einzuschieben. Das Riegelteil 250 ist am Punkt der maximalen Höhe H232 des Führungsteils 232 dann wieder maximal in das Betätigungsteil 272 eingeschoben. Während das Riegelteil 250 im weiteren Verlauf der Verschwenkbewegung des Betätigungshebels 234 entlang der bogenförmigen Führungsfläche 248 des Führungsteils 232 verschoben wird, findet wiederum keine oder nur eine geringe relative Bewegung des Riegelteils 250 zum Betätigungsteil 272 statt, so dass in diesem Verschwenkbereich eine geringere Kraft von der Bedienperson aufgewendet werden muss. Ab dem Übergang auf die rechte Seitenfläche 260 des Führungsteils 232 wird das Riegelteil 250 dann wieder aus dem Betätigungsteil 272 ein kurzes Stück ausgeschoben. Dies bewirkt, dass sich der Betätigungshebel 234 das letzte Stück bis in die Entriegelungsstellung ES bewegt und dort sicher gehalten wird.

Somit weist die Abdeckeinrichtung 202 auch bei dieser Ausführungsform eine Verriegelungseinrichtung 200 auf, mittels der das Andrückteil 206 gegen die Wirkung eines Energiespeichers 208 gegen eine Bewegung in die Spannposition wahlweise sicherbar (Verriegelungsstellung VS) oder für eine Spannbewegung (in der Entriegelungsstellung ES) freigebbar ist.

## Patentansprüche

1. Einrichtung zur Fixierung und/oder Führung von strangförmigen Elementen, insbesondere von Kabeln (5; 181) oder Kabelbündeln bei Windkraftanlagen, mit mindestens einem zur Bildung eines modularen Befestigungssystems mit einer Trägerstruktur kombinierbaren Haltekörper (1;101), der einen Strangaufnahmeraum (9; 109) als Lagerung für zumindest ein Strangelement aufweist, das in diesen durch eine an dessen Außenseite befindliche Öffnung (29; 111) einlegbar ist; mit einer Abdeckeinrichtung (9; 117; 202), wobei die Öffnung (29; 111) durch die Abdeckeinrichtung (9; 117; 202) verschließbar ist, die ein Hauptteil (47; 127; 204), einen Energiespeicher (51; 137; 208) und ein Andrückteil (17; 129; 206) aufweist, das mittels des Energiespeichers (51; 137; 208) relativ zum Hauptteil (47; 127; 204) in eine Spannposition bewegbar ist, um, wenn die Abdeckeinrichtung (9; 117; 202) die Öffnung (29, 111) verschließt, innerhalb eines Spannbereichs eine Haltekraft auf im Strangaufnahmeraum (9; 109) befindliche Strangelemente auszuüben, **dadurch gekennzeichnet, dass** die Abdeckeinrichtung (9; 117; 202) eine Verriegelungseinrichtung (69; 141; 200) aufweist, mittels der das Andrückteil (17; 129; 206) gegen die Wirkung des Energiespeichers (51; 137; 208) gegen eine Bewegung in die Spannposition wahlweise sicherbar oder für eine Spannbewegung freigebbar ist.

2. Einrichtung nach Anspruch 1, **dadurch gekennzeichnet, dass** das Andrückteil (17; 129; 206) durch mindestens eine als Energiespeicher dienende Druckfeder (51; 137; 208), die sich an dem am Haltekörper (1; 101) anbringbaren Hauptteil (47; 127; 204) der Abdeckeinrichtung (9; 117; 202) abstützt, für die relativ zum Hauptteil (47; 127; 204) erfolgende Bewegung in die Spannposition vorgespannt ist.

3. Einrichtung nach Anspruch 1 oder 2, **dadurch gekennzeichnet, dass** das Hauptteil (47; 127; 204) der Abdeckeinrichtung (9; 117; 202) ein in Richtung auf das Andrückteil (17; 129; 206) offenes Schalenteil (47; 127) aufweist und das Andrückteil (17; 129; 206) in Form eines zweiten Schalenteils (49; 129) ausgebildet ist, das im ersten Schalenteil (47; 127) teleskopartig bewegbar ist und mit seiner Bodenfläche den die Haltekraft auf Strangelemente übertragenden Drücker (53;131) bildet.

4. Einrichtung nach einem der vorstehenden Ansprüche, **dadurch gekennzeichnet, dass** die Lagerung zwei in Axialrichtung der Strangelemente beabstandete Lagerwangen (19, 21) aufweist, die in jeweils einer von der Öffnung (29) an der Außenseite ausgehenden, muldenartigen Ausnehmung (27) die Anlageflächen (33, 35) für Strangelemente bilden.

5. Einrichtung nach Anspruch 4, **dadurch gekennzeichnet, dass** der Haltekörper (1) ein Gestell in Form eines U-Profils aufweist, bei dem die Lagerwangen (19, 21) durch parallel zueinander verlaufende Profilschenkel gebildet sind, die durch einen eine Anbringfläche für die Verbindung mit der Trägerstruktur bildenden Steg (23) miteinander verbunden sind.

6. Einrichtung nach Anspruch 4 oder 5, **dadurch gekennzeichnet, dass** die Weite der Ausnehmungen (27) der Lagerwangen (19, 21), ausgehend von den Anlageflächen (33, 35) am Grund (31) der Ausnehmungen (27) in Richtung auf die Öffnung (29) hin in Stufen erweitert ist, von denen untere Stufen Führungsflächen (35) für die Spannbewegung des Andrückteils (49) und sich in Richtung der Öffnung (29) anschließende Stufen Sitzflächen (37) für die an der Lagerung angebrachte Abdeckeinrichtung (9) bilden.

7. Einrichtung nach einem der Ansprüche 4 bis 6, **dadurch gekennzeichnet, dass** das Hauptteil (47) der Abdeckeinrichtung (9) ein in Richtung auf das Andrückteil (49) offenes Schalenteil aufweist, das sich bei an der Lagerung angebrachter Position in Axialrichtung der Strangelemente von Lagerwange (19) zu Lagerwange (21) erstreckt und an den zwischen diesen verlaufenden Seiten Führungsbahnen (61) bildet, in denen Ansätze (59) des Andrückteils (49) für dessen relativ zum Hauptteil (47) erfolgende Bewegungen geführt sind.

8. Einrichtung nach Anspruch 7, **dadurch gekennzeichnet, dass** die Ansätze (59; 218) des Andrückteils (49; 206) mit über das Hauptteil (47; 204) überstehenden Endbereichen Funktionselemente der Verriegelungseinrichtung (59, 69, 71; 200) bilden.

9. Einrichtung nach Anspruch 8, **dadurch gekennzeichnet, dass** die Verriegelungseinrichtung einen manuell drehbaren Exzenter (69) aufweist, der sich auf der Oberseite (63) des Hauptteils (47) abstützt, so dass die die Exzenterachse bildende Exzenterwelle (71) bei Drehung eine Hubbewegung relativ zum Hauptteil (47) ausführt, und dass die Exzenterwelle (71) in ein Langloch (73) in den Ansätzen (59) des Andrückteils (49) derart eingreift, dass bei der Verriegelungsstellung des Exzenters (69) das Andrückteil (49) gegen die vorspannende Federwirkung an das Hauptteil (47) gezogen ist und bei der Freigabestellung des Exzenters (69) für die Spannbewegung freigegeben ist.

10. Einrichtung nach Anspruch 6 bis 9, **dadurch gekennzeichnet, dass** die Lagerwangen (19, 21) an der Öffnung (29) der Ausnehmungen (27) gegeneinander vorspringende Hakenteile (45) aufweisen, die sich an in den Lagerwangen (19, 21) gebildete Vertiefungen (41, 43) anschließen, die beim Vorgang des Anbringens der Abdeckeinrichtung (9) durchgreifbar sind, wobei die Hakenteile (45) am Hauptteil (47) seitlich auskragend angeordnet und bei der angebrachten Position der Abdeckeinrichtung (9) von den Halteteilen (45) übergriffen sind.

11. Einrichtung nach Anspruch 9 oder 10, **dadurch gekennzeichnet, dass** Halteflügel (77) an den Enden einer Deckplatte (65) des Hauptteils (47) vorgesehen sind, auf der sich der Exzenter (69) der Verriegelungseinrichtung (59, 69, 71) abstützt.

12. Einrichtung nach einem der Ansprüche 7 bis 11, **dadurch gekennzeichnet, dass** an beiden den Lagerwangen (19, 21) zugeordneten Enden der die Führungsbahnen (61) aufweisenden Seiten des Hauptteils (47) nachgiebig vorspringende Rastnasen (79) vorgesehen sind, die bei auf die Lagerung ausgerichteter Position der Abdeckeinrichtung (9) an den Innenseiten der Lagerwangen (19, 21) einrasten.

13. Einrichtung nach einem der Ansprüche 1 bis 3, **dadurch gekennzeichnet, dass** die Verriegelungseinrichtung einen manuell drehbaren Exzenter (141) aufweist, der sich auf der Oberseite (157) des Hauptteils (127) derart abstützt, dass ein zugehöriger, die Exzenterachse bildender Kurbelzapfen (149) bei Drehung eine Hubbewegung relativ zum Hauptteil (127) ausführt und dass der Kurbelzapfen (149) mit dem Andrückteil (129) über eine Pleuelstange (151) derart gekoppelt ist, dass bei der Verriegelungsstellung des Exzenters (141) das Andrückteil (129) gegen die vorspannende Federwirkung an das Hauptteil (127) gezogen ist und bei der Freigabestellung des Exzenters (141) für die Spannbewegung freigegeben ist.

14. Einrichtung nach Anspruch 13, **dadurch gekennzeichnet, dass** der Exzenter (141) ein Zylinderteil (145, 147) aufweist, das mittels eines von ihm auskragenden Handhebels (143) manuell drehbar ist, sich an der Oberseite (157) des Hauptteils (127) abstützt und den in einem Abstand von der Zylinderachse befindlichen Kurbelzapfen (149) aufweist.

15. Einrichtung nach Anspruch 14, **dadurch gekennzeichnet, dass** das Zylinderteil durch zwei in einem Abstand voneinander befindliche Kreisscheiben (145, 147) gebildet ist, zwischen denen der Kurbelzapfen (149) für die zwischen die Kreisscheiben (145, 147) eingreifende Pleuelstange (151) angeordnet ist.

16. Einrichtung nach Anspruch 15, **dadurch gekennzeichnet, dass** an der Oberseite (157) des Hauptteils (127) eine Mulde (159) als Lagerung des Zylinderteils (145, 147) gebildet ist, in die dieses durch eine Ausnehmung (163) hindurch eingreift, die in einer Deckplatte (161) ausgespart ist, die an der Oberseite (157) des Hauptteils (127) anliegt, wobei die Ausnehmung (163) durch einander gegenüberliegende Öffnungsränder (165) begrenzt ist, die entlang der Ebenen der in die Ausnehmung (163) eingreifenden Kreisscheiben (145, 147) verlaufen.

17. Einrichtung nach einem der Ansprüche 13 bis 16, **dadurch gekennzeichnet, dass** der Haltekörper (101) einen Strangaufnahmeraum in Form einer U- oder V-förmigen Vertiefung (109) mit einer Einlegeöffnung (111) mit einander gegenüberliegenden Öffnungsrändern (113, 115) aufweist, an deren einem (115) die Abdeckeinrichtung (117) derart schwenkbar angebracht ist, dass sie zwischen einer Öffnungsstellung und einer die Einlegeöffnung (111) verschließenden Stellung bewegbar ist, und dass an der Abdeckeinrichtung (117) eine Riegelanordnung (121) vorgesehen ist, mittels der sie in der verschließenden Stellung lösbar mit dem anderen Öffnungsrand (113) verriegelbar ist.

18. Einrichtung nach Anspruch 17, **dadurch gekennzeichnet, dass** der Haltekörper (101) durch ein Blechbiegeteil mit einem ersten flachen Plattenteil (103), das die Vertiefung (109) des Strangaufnahmeraums aufweist, und einem davon abgewinkelten zweiten Plattenteil (105) gebildet ist, das eine der Einlegeöffnung (111) gegenüberliegende Anbringfläche für die Verbindung mit einer Trägerstruktur bildet.

19. Einrichtung nach Anspruch 18, **dadurch gekennzeichnet, dass** das Hauptteil (127) der Abdeckeinrichtung (117) für die Verbindung mit jedem Öffnungsrand (113, 115) der Einlegeöffnung (111) des ersten Plattenteils (103) je ein Paar vom Hauptteil (127) in entgegengesetzte Richtung auskragender Arme (169) aufweist, zwischen denen ein den Eingriff dieses Plattenteils (103) ermöglichender Zwischenraum gebildet ist.

20. Einrichtung nach Anspruch 17 bis 19, **dadurch gekennzeichnet, dass** die Arme (169) des der Riegelanordnung (121) zugeordneten Armpaares je ein Langloch (173) aufweisen, in dem ein Riegelbolzen (171) zwischen einer Riegelstellung, in der er mit einem Riegelhaken (125) am Öffnungsrand (113) verrastet ist, und einer zurückgezogenen Entriegelstellung bewegbar ist, und dass eine den Riegelbolzen (171) in die Riegelstellung vorspannende Betätigungsfeder (75) vorhanden ist, die zum Lösen der Riegelanordnung (121) manuell in eine den Riegelbolzen (171) zurückziehende Stellung bewegbar ist.

## Claims

1. Device for fixing and/or guidance of strand-like elements, in particular of cables (5; 181) or cable bundles for wind turbines, with at least one retaining body (1, 101) which can be combined with a carrier structure to form a modular fastening system which has a strand accommodation space (9; 109) as mounting space for at least one strand element, which can be inserted through an aperture (29, 111) located on its exterior; with a cover device (9; 117; 202), wherein the aperture (29; 111) can be closed by the cover device (9; 117; 202), which comprises a main member (47; 127; 204), an energy storage means (51; 137; 208), and a pressure application member (17; 129; 206), which can be moved by the energy storage means (51; 137; 208) relative to the main member (47; 127; 204) into a clamping position so that, when the cover device (9; 117; 202) closes the aperture (29, 111), a retaining force is exerted within a clamping range on the strand elements within the strand receiving accommodation space (9; 109), **characterised in that** the cover device (9; 117; 202) has a locking device (69; 141; 200), by means of which the pressure application member (17; 129; 206) can be optionally secured against the action of the energy storage means (51; 137; 208) against a movement into the clamping position or can be released for a clamping movement.

2. Device in accordance with claim 1, **characterised in that** the pressure application member (17; 129; 206), through at least one compression spring (51; 129, 208) acting as energy storage means, support on the main member (47; 127; 204) mountable on the retaining body (1; 101) of the cover device (9; 117; 202), for the subsequent movement relative to the main member (47; 127; 204) into the stressed position.

3. Device in accordance with claim 1 or 2, **characterised in that** the main member (47; 127; 204) of the cover device (9; 117; 202) has a shell component (47;127) open in the direction towards the pressure application member (17; 129; 206) and the pressure application member (17; 129; 206) is configured in the form of a second shell component (49; 129), that can be moved telescopically in the first shell component (47; 127) and forms the pressure device (53;131) transmitting the retaining force to the strand elements with its bottom surface.

4. Device in accordance with one of the preceding claims, **characterised in that** the mounting comprises two lateral support members (19, 21), spaced in the axial direction of the strand elements, which form the support surfaces (33, 35) for strand elements in a trough-like recess (27) respectively extending from the aperture (29) on the outside.

5. Device in accordance with claim 4, **characterised in that** the retaining body (1) has a frame in the form of a U-shaped profile, with which the lateral support members (19, 21) are formed by profile arms extending parallel to one another that are connected by a cross-piece (23) forming a mounting surface for attachment to the supporting structure.

6. Device in accordance with claim 4 or 5, **characterised in that** the width of the apertures (27) of the lateral support members (19, 21), is enlarged in steps, starting from the support surfaces (33, 35) at the base (31) of the apertures (27) in the direction of the aperture (29), from which lower steps (35) form guide surfaces (35) for the clamping movement of the pressure application member (49) and connecting steps in the direction of the aperture (29) seating surfaces (37) for the cover device (9) mounted on the support.

7. Device in accordance with one of the claims 4 to 6, **characterised in that** the main member (47) of the cover device (9) comprises a shell component open in the direction of the pressure application member (49), which extends from lateral support member (19) to lateral support member (21) in the axial direction of the strand elements and forms guide tracks (61) on the sides running between them, in which attachments (59) of the pressure application member (49) are guided for their subsequent movements relative to the main member (47).

8. Device in accordance with claim 7, **characterised in that** the attachments (59; 218) of the pressure application member (49; 206) with end portions projecting over the main member (47; 204) form functional elements of the locking device (59, 69, 71; 200).

9. Device in accordance with claim 8, **characterised in that** the locking device comprises a manually rotatable eccentric cam (69), which is supported on the upper side (63) of the main member (47) so that the eccentric cam shaft (71) forming the eccentric axis executes a reciprocating movement relative to the main part (47) when rotated, and that the eccentric shaft (71) engages in an elongated opening (73) in the attachments (59) of the main member (49), so that, in the locking position of the eccentric cam (69), the pressure application member (49) is pulled against the prestressing spring action to the main member (47) and, in the release position of the eccentric cam (69), is released for the clamping movement.

10. Device in accordance with claims 6 to 9, **characterised in that** the lateral support members (19, 21) have mutually projecting hook members (45) at the opening (29) of the apertures (27), which are connected to die recesses (41, 43) formed in the lateral support members (19, 21), which can be passed through during the operation of attaching the cover device (9), wherein the hook members (45) are located on the main member (47) projecting laterally and in the mounted position of the cover device (9) are engaged by the retaining members (45).

11. Device in accordance with claim 9 or 10, **characterised in that** retaining wings (77) are provided at the ends of a cover plate (65) of the main member (47), on which the eccentric cam (69) of the locking device (59, 69, 71) is supported.

12. Device in accordance with one of the claims 7 to 11, **characterised in that**, at both ends associated with the lateral support members (19, 21) of the sides of the main member (47) containing the guide tracks (61), protruding latching lugs (79) are provided which, with the position of the cover device (9) aligned with the mounting, engage on the insides of the lateral support member (19, 21).

13. Device in accordance with one of the claims 1 to 3, **characterised in** the locking device comprises a manually rotatable eccentric cam (141), which is supported on the upper side (157) of the main member (127), so that an associated crankpin (149) forming the eccentric axis executes a stroke movement relative to the main member (127) when turned and that the crankpin (149) is coupled with the pressure application member (129) by means of a connecting rod (151) so that, when the eccentric cam (141) is in a locked position, the pressure application member (129) is drawn against the spring action to the main member (127) and when the eccentric cam (141) is released for the clamping movement.

14. Device in accordance with claim 13, **characterised in that** the eccentric cam (141) has a cylindrical portion (145, 147), which can be rotated manually by means of a handle (143) projecting from it, which is supported on the upper side (157) of the main member (127) and has the crankpin (149) located at a distance from the cylinder axis.

15. Device in accordance with claim 14, **characterised in that** the cylindrical portion is formed by two circular discs (145, 147), spaced from one another, between which the crankpin (149) is arranged for the connecting rod (151) engaging between the circular discs (145, 147).

16. Device in accordance with claim 15, **characterised in that** a trough (159) is formed on the upper side (157) of the main member (127) as mounting for the cylindrical portion (145, 147), in which this engages through an aperture (163), which is cut out in a cover plate (161), which rests on the upper side (157) of the main member (127), wherein the aperture (163) is defined by opposite edges (165), which extend along the planes of the circular discs (145, 147) engaging in the aperture (163).

17. Device in accordance with one of the claims 13 to 16, **characterised in that** the retaining body (101) has a strand accommodation space in the form of a U-or V-shaped recess (109) with an inlet opening (111) with opposing opening edges (113, 115), on one of which (115) the cover device (117) is mounted pivotably, so that it can be moved between an open position and position closing the inlet opening (111), and that a latching arrangement (121) is provided on the cover device (117), by means of which it can be releasably locked in the closed position with the other opening edge (113).

18. Device in accordance with claim 17, **characterised in that** the retaining body (101) is formed by a bent sheet metal part with a first flat plate portion (103), having the recess (109) of the strand accommodation space, and a second plate portion (105) at an angle to it, forming the mounting surface opposite the inlet opening (111) for attachment to a support structure.

19. Device in accordance with claim 18, **characterised in that** the main member (127) of the cover device (117), has a pair of arms (169) extending from the main member (127) in opposite directions for joining with each opening edge (113, 115) of the inlet opening (111) of the first plate portion (103), between which a space is formed enabling engagement with this plate portion (103).

20. Device in accordance with claims 17 to 19, **characterised in that** the pair of arms (169) associated with the latching arrangement (121) each have an elongated hole (173), in which a latching bolt (171) can be moved between a latching position, in which it is latched with a latching hook (125) at the opening edge (113), and a withdrawn unlatching position, and that an actuating spring (75) preloads the latching bolt (171) in the latching position, and can be moved manually into a position withdrawing the latching bolt (171) to release the latching arrangement (121)..

## Revendications

1. Dispositif d'immobilisation et/ou de guidage d'éléments filiformes, notamment de câbles (5 ; 181) ou de faisceaux de câble dans des éoliennes, comprenant au moins un corps (1 ; 101) de retenue pouvant, pour former un système de fixation modulaire, se combiner à une structure de support et ayant un espace (9, 109) de réception comme logement d'au moins un élément filiforme, qui peut y être inséré par une ouverture (29 ; 111) se trouvant sur son côté extérieur, comprenant un dispositif (9 ; 117 ; 202) de recouvrement, l'ouverture (29 ; 111) pouvant être fermée par le dispositif (9 ; 117 ; 202) de recouvrement, qui a une partie (47 ; 127 ; 204) principale, un accumulateur (51 ; 137 ; 208) d'énergie et une partie (17 ; 129 ; 206) d'application d'une pression, qui, au moyen de l'accumulateur (51 ; 137 ; 208) d'énergie, est mobile par rapport à la partie (47 ; 127 ; 204) principale pour venir dans une position de serrage, afin, lorsque le dispositif (9 ; 117 ; 202) de recouvrement ferme l'ouverture (29 ; 111), d'appliquer, dans une plage de serrage, une force de retenue à des éléments filiformes se trouvant dans l'espace (9 ; 109) de réception, **caractérisé en ce que** le dispositif (9 ; 117 ; 202) de recouvrement a un dispositif (69 ; 141 ; 200) de verrouillage, au moyen duquel la partie (17 ; 129 ; 206) d'application d'une pression peut, au choix, être empêchée d'effectuer un déplacement vers la position de serrage ou être libre d'effectuer un déplacement de serrage.

2. Dispositif suivant la revendication 1, **caractérisé en ce que** la partie (17 ; 129 ; 206) d'application d'une pression est, par au moins un ressort (51 ; 137 ; 208) de compression servant d'accumulateur d'énergie, qui s'appuie sur la partie (47 ; 127 ; 204) principale pouvant être mise sur le corps (1 ; 101) de retenue du dispositif (9 ; 117 ; 202) de recouvrement, précontrainte pour le déplacement s'effectuant par rapport à la partie (47 ; 127 ; 204) principale, vers la position de serrage.

3. Dispositif suivant la revendication 1 ou 2, **caractérisé en ce que** la partie (47 ; 127 ; 204) principale du dispositif (9 ; 117 ; 202) de recouvrement a une partie (47 ; 127) de cuvette ouverte en direction de la partie (17 ; 129 ; 206) d'application d'une pression et la partie (17 ; 129 ; 206) d'application d'une pression est constituée sous la forme d'une deuxième partie (49 ; 129) de cuvette, qui est mobile télescopiquement dans la première partie (47 ; 127) de cuvette et qui forme, par sa surface de fond, le poussoir (53 ; 131) appliquant la force de retenue aux éléments filiformes.

4. Dispositif suivant l'une des revendications précédentes, **caractérisé en ce que** le logement a deux flasques (19, 21), qui sont à distance dans la direction axiale des éléments filiformes et qui, dans, respectivement, un évidement (27) de type en cuvette partant de l'ouverture (29) du côté extérieur, forment les surfaces (33, 35) de contact pour des éléments filiformes.

5. Dispositif suivant la revendication 4, **caractérisé en ce que** le corps (1) de retenue a un bâti sous la forme d'un profilé en U, dans lequel les flasques (19, 21) sont formés par des branches du profilé s'étendant parallèlement entre elles et reliées entre elles par une âme (23) formant une surface d'application pour la liaison avec la structure de support.

6. Dispositif suivant la revendication 4 ou 5, **caractérisé en ce que** la largeur des évidements (27) des flasques (19, 21), à partir des surfaces (33, 35) de contact au fond (31) des évidements (27), s'élargit par degré en direction de l'ouverture (29), les degrés inférieurs formant des surfaces (35) de guidage du déplacement de serrage de la partie (49) d'application d'une pression et des degrés, venant ensuite en direction de l'ouverture (29), formant des surfaces (37) d'assise du dispositif (9) de recouvrement mis sur le logement.

7. Dispositif suivant l'une des revendications 4 à 6, **caractérisé en ce que** la partie (47) principale du dispositif (9) de recouvrement a une partie de cuvette, qui est ouverte en direction de la partie (49) d'application d'une pression, qui s'étend, dans la position mise sur le logement, dans la direction axiale des éléments filiformes du flasque (19) au flasque (21) et qui forme, sur les côtés s'étendant entre ces flasques, des glissières (61) dans lesquelles- sont guidés des appendices (59) de la partie (49) d'application d'une pression pour ses déplacements s'effectuant par rapport à la partie (47) principale.

8. Dispositif suivant la revendication 7, **caractérisé en ce que** les appendices (59 ; 218) de la partie (49 ; 206) d'application d'une pression forment, avec des régions d'extrémité dépassant de la partie (47 ; 204) principale, des éléments fonctionnels du dispositif (59 ; 69 ; 71 ; 200) de verrouillage.

9. Dispositif suivant la revendication 8, **caractérisé en ce que** le dispositif de verrouillage a un excentrique (69), qui peut être tourné manuellement et qui s'appuie sur le côté (63) supérieur de la partie (47) principale, de sorte que l'arbre (71) de l'excentrique formant l'axe de l'excentrique exécute, lors de la rotation, une ascension par rapport à a partie (47) principale et **en ce que** l'arbre (71) de l'excentrique pénètre dans une boutonnière (73) des appendices (59) de la partie (49) d'application d'une pression, de manière à ce que, dans la position de verrouillage de l'excentrique (69), la partie (49) d'application d'une pression soit tirée à l'encontre de l'effet de ressort de précontrainte sur la partie (47) principale et de manière à ce qu'elle soit libérée pour le déplacement de serrage dans la position de libération de l'excentrique (69).

10. Dispositif suivant la revendication 6 à 9, **caractérisé en ce que** les flasques (19, 21) ont, à l'ouverture (29) des évidements (27), des parties (45) de crochet faisant saillie l'une vers l'autre et suivent des cavités (41, 43) formées dans les flasques (19, 21), que, lorsque le dispositif de recouvrement est mis, peuvent traverser des ailes (77) de retenue disposées en porte à faux latéralement sur la partie (47) principale et qui, en la position où le dispositif (9) de recouvrement est mis, sont accrochées par les parties (45) de crochets.

11. Dispositif suivant la revendication 9 ou 10, **caractérisé en ce que** les ailes (77) de retenue sont prévues aux extrémités d'un plateau (65) de recouvrement de la partie (47) principale sur lequel l'excentrique (69) du dispositif (59,69, 71) de verrouillage s'appuie.

12. Dispositif suivant l'une des revendications 7 à 11, **caractérisé en ce qu'**aux deux extrémités, associées aux flasques (19, 21), des côtés, ayant les glissières (61), de la partie (47) principale sont prévus des becs (79) d'encliquetage en saillie et cédant élastiquement, qui, en la position, dirigée sur le logement, du dispositif (9) de recouvrement, s'encliquètent sur les côtés intérieurs des flasques (19, 21).

13. Dispositif suivant l'une des revendications 1 à 3, **caractérisé en ce que** le dispositif de verrouillage a un excentrique (141), qui peut être tourné manuellement et qui s'appuie sur le côté (157) supérieur de la partie (127) principale, de manière à ce qu'un tourillon (149) de manivelle associé, formant l'axe de l'excentrique, exécute, lors de la rotation, une ascension par rapport à la partie 127) principale et de manière à ce que le tourillon (149) de manivelle soit couplé à la partie (129) d'application d'une pression par une bielle (151), en de manière à ce que, dans la position de verrouillage de l'excentrique (141), la partie (129) d'application d'une pression soit tirée, à l'encontre de l'effet de ressort de précontrainte sur la partie (127) principale et, dans la position de libération l'excentrique (41) soit libre d'effectuer le déplacement de serrage.

14. Dispositif suivant la revendication 13, **caractérisé en ce que** l'excentrique (141) a une partie (145, 147) cylindrique, qui peut être tournée manuellement au moyen d'un levier (143) à main en porte à faux de celle-ci, qui s'appuie sur le côté (157) supérieur de la partie (127) principale et qui a le tourillon (149) de manivelle se trouvant à distance de l'axe du cylindre.

15. Dispositif suivant la revendication 14, **caractérisé en ce que** la partie cylindrique est formée de deux disques (145, 147) circulaires se trouvant à distance l'un de l'autre et entre lesquels est disposé le tourillon (149) de manivelle pour la bielle (151) pénétrant entre les disques (145, 147) circulaires.

16. Dispositif suivant la revendication 15, **caractérisé en ce que**, du côté (157) supérieur de la partie (127) principale, est formé, comme logement de la partie (145, 147) cylindrique, une cuvette (159), dans laquelle cette partie pénètre en passant par un évidement (163) ménagé dans une plaque (161)de recouvrement s'appliquant au côté (157) supérieur de la partie (127) principale, l'évidement (163) étant délimité par des bords (165) d'ouverture opposés, qui s'étendent dans les plans des disques (145, 147) circulaires pénétrant dans l'évidement (163).

17. Dispositif suivant l'une des revendications 13 à 16, **caractérisé en ce que** le corps (101) de retenu a un espace de réception sous la forme d'une cavité (109) en forme de U ou de V, ayant une ouverture (111) d'introduction à bords (113, 115) opposés mutuellement, sur l'un (115) desquels le dispositif (117) de recouvrement est monté pivotant, de manière à pouvoir se déplacer entre une position d'ouverture et une position fermant l'ouverture (111) d'introduction et **en ce qu'**il est prévu, sur le dispositif (117) de recouvrement, un agencement (121) de verrou, au moyen duquel il peut être verrouillé avec l'autre bord (113) de l'ouverture, de manière amovible, dans la position de fermeture.

18. Dispositif suivant la revendication 17, **caractérisé en ce que** le corps (101) de retenue est formé d'une partie de tôle pliée ayant une première partie (103) de plaque plane, qui a la cavité (109) de l'espace de réception, et une deuxième partie (105) de plaque coudée par rapport à celle-ci, qui forme une surface d'application opposée à l'ouverture (111) d'insertion, pour la liaison avec une structure de support.

19. Dispositif suivant la revendication 18, **caractérisé en ce que** la partie (127) principale du dispositif (117) de recouvrement a, pour la liaison avec chaque bord (113, 115) de l'ouverture (111) d'insertion de la première partie (103) de plaque, respectivement, une paire de bras (169) en porte à faux en sens opposé de la partie (127) principale, entre lesquels est formé un espace intermédiaire permettant la pénétration de cette partie (103) de plaque.

20. Dispositif suivant la revendication 17 à 19, **caractérisé en ce que** les bras (169) de la paire de bras, associée à l'agencement (121) de verrou, ont chacun une boutonnière (173), dans laquelle un axe (171) de verrouillage peut se déplacer entre une position de verrouillage, dans laquelle il est encliqueté par un crochet (125) de verrouillage au bord (113) de l'ouverture, et une position de déverrouillage en retrait et **en ce qu'**il y a un ressort (75) d'actionnement, qui précontraint l'axe (171) de verrouillage dans la position de verrouillage et qui, pour libérer l'agencement (121) de verrou, peut être déplacé manuellement pour venir dans une position retirant l'axe (171) du verrou.
